# EUROPEAN PATENT SPECIFICATION

(11) **EP 4 426 578 B1**
(45) Date of publication and mention of the grant of the patent: **06.08.2025**
(21) Application number: 22813715.4
(22) Date of filing: 03.11.2022
(51) Int. Cl.: B60K 35/10, B64C 1/00, B60K 35/215, B64D 31/18, B64D 45/00, B60K 35/22, B64D 27/33, B60K 35/28, B60K 35/29, B60K 35/90

(54) **INFORMATION DISPLAY SYSTEM AND METHOD FOR ELECTRIC OR HYBRID AIRCRAFTS**
INFORMATIONSANZEIGESYSTEM UND VERFAHREN FÜR ELEKTRISCHE ODER HYBRIDE FLUGZEUGE
SYSTÈME ET PROCÉDÉ D'AFFICHAGE D'INFORMATIONS POUR AÉRONEFS ÉLECTRIQUES OU HYBRIDES

(30) Priority: 05.11.2021 CH 0705132021
(43) Date of publication of application: 11.09.2024
(73) Proprietor: H55 SA, 1950 Sion (CH)
(72) Inventor: BOIRIN, Stéphane, Pierre-Jean, 1965 Savièse (CH); OSEN, Karl, 1950 Sion (CH); AYMON-DEMONT, Sébastien, 1966 Ayent (CH); DANI, Bastian, 3972 Miège (CH)
(74) Representative: P&TS SA (AG, Ltd.)
(86) International application number: PCT/IB2022/060613
(87) International publication number: WO 2023/079492

(56) References cited:
- WO-A1-2020/044134
- DE-A1- 102017 122 850
- US-B2- 9 659 415

## Description

### Technical domain

The present invention concerns an information display system for an aircraft displaying information pertaining to monitored components of an electric or a hybrid aircraft.

### Background

Electric and hybrid vehicles have become increasingly significant for the transportation of people and goods. Such vehicles can desirably provide energy efficiency advantages over combustion-powered vehicles and may cause less air pollution than combustion-powered vehicles during operation.

Although the technology for electric and hybrid automobiles has significantly developed in recent years, many of the innovations that enabled a transition from combustion-powered to electric-powered automobiles unfortunately do not directly apply to the development of electric or hybrid aircraft. The functionality of automobiles and the functionality of aircraft are sufficiently different in many aspects so that many of the design elements for electric and hybrid aircraft must be uniquely developed separate from those of electric and hybrid automobiles.

Moreover, any changes to an aircraft's design, such as to enable electric or hybrid operation, also require careful development and testing to ensure safety and reliability. If an aircraft experiences a serious failure during flight, the potential loss and safety risk from the failure may be very high as the failure could cause a crash of the aircraft and pose a safety or property damage risk to passengers or cargo, as well as individuals or property on the ground.

The certification standards for electric or hybrid aircraft are further extremely stringent because of the risks posed by new aircraft designs. Designers of aircraft have struggled to find ways to meet the certification standards and bring new electric or hybrid aircraft designs to market.

In view of these challenges, attempts to make electric and hybrid aircraft commercially viable have been largely unsuccessful. New approaches for making and operating electric and hybrid aircraft thus continue to be desired.

Flying a manned or unmanned aircraft such an airplane can be dangerous. Problems with the aircraft may result in injury or loss of life for passengers in the aircraft or individuals on the ground, as well as damage to goods being transported by the aircraft or other items around the aircraft.

The reliability of systems can be improved with redundant subsystems. Various designs have been suggested in order to replace a faulty subsystem with a backup subsystem. For example, in the context of electric powered object or vehicles, US20171210229 A1 and US20111254502A1 both describe a fault-tolerant battery management system in which the state of battery cells is monitored and/or controlled by redundant battery management systems (BMS), such that a default in one BMS does not prevent the battery from functioning as long as the redundant BMS performs properly. However, if the two BMS are identical, they are more likely to present the same defaults or conception problems, and are also more likely to have failure simultaneously or at short interval. Moreover, those solutions have not been designed with the aim of certification for aircraft; adding additional components increase the complexity of the system and makes the certification even more difficult.

In order to attempt to mitigate potential problems associated with an aircraft, numerous organizations have developed certification standards for ensuring that aircraft designs and operations satisfy threshold safety requirements. The certification standards may be stringent and onerous when the degree of safety risk is high, and the certification standards may be easier and more flexible when the degree of safety risk is low.

As an example, the FAA advisory circular AC 25.1309-1 describes acceptable means for showing compliance with the airworthiness requirements of US Federal Aviation Regulations defines different levels of failure conditions according to their severity:
- Failure Conditions with No Safety Effect.
- Minor Failure Conditions.
- Major Failure Conditions.
- Hazardous Failure Conditions must be no more frequent than Extremely Remote.
- Catastrophic Failure Conditions must be Extremely Improbable.

While airplanes must be designed so that hazardous and catastrophic failure conditions are extremely remote or even extremely improbable, those severe failure conditions must nevertheless be monitored, so that warning signals are sent to the pilot and driver who may attempt to remedy to the condition or try to land the aircraft. The monitoring and warning systems must be reliable and also requires certification.

Such certification standards have unfortunately had the effect of slowing commercial adoption and production of electric or hybrid aircraft. Electrical hybrid aircraft may, for example, utilize new aircraft designs relative to traditional aircraft designs to account for differences in operations of electric or hybrid aircraft versus traditional aircraft. The new designs however may be significantly different from the traditional aircraft designs. These differences may subject the new designs to extensive testing prior to certification. The need for extensive testing can take many resources, time and significantly drive up the ultimate cost of the aircraft.

Compliance of a monitoring and/or a warning subsystem with the certification standard depends on the severity of the monitored failure condition. Therefore, a hazardous or catastrophic failure condition requires a strict level of certification of the corresponding monitoring and warning system, while a minor failure condition or a condition without any safety effect have lower safety requirements and requires a monitoring and warning system that is easier to certify, or requires no certification.

A power management system for an electric or hybrid plane having different subsystem to meet the safety certification requirements relating to safety risk analysis is disclosed in WO2020044134A1. The system comprises a first and a second battery and a first and a second transducer, the first battery being configured to power the first transducer and the second battery being configured to power the second transducer to propel a housing.

DE102017122850A1 concerns a display system for an electrically powered scooter with two distinct display units. The system was developed for scooters, which have entirely different and less stringent regulatory safety requirements than aircrafts.

US9659415B2 describes a warning system comprising a warning device for alerting of an abnormality or a danger and a display device for conveying information related to operating conditions and error messages. A central processing unit is configured to control operations of the display device and of the warning device.

Despite the approaches to provide reliable failure detection and warning systems described above, there is still a need for simplified, yet robust, components and systems for an electric powered aircraft that simplify and streamline certifications requirements and reduce the cost and time required to produce a commercially viable electric aircraft.

There is also a need for a robust and reliable hazardous or catastrophic failure warning system, which is simplified such as to facilitate a streamlined certification of the aircraft and therefore to reduce the cost and time required to produce a commercially viable electric or hybrid aircraft.

### Short disclosure of the invention

An aim of the present invention is the provision of a information display system that is robust, yet sufficiently simple such as to facilitate a streamlined certification of the electric or hybrid aircraft and which can reliably notify hazardous or catastrophic failure conditions.

According to the invention, one or more of these aims are attained by the object of the attached claims, and especially by the independent claims.

In particular, the aims are attained with the provision of an information display system for an electric or hybrid plane for notifying failures of a plurality of components of the electric or hybrid aircraft, said components including at least one battery pack or at least one electrical motor, the information system comprising:
a first, programmable monitoring subsystem for monitoring said components and delivering a first set of parameters relating to said components;
a second, non-programmable monitoring subsystem for monitoring said components and delivering a second set of parameters relating to said components;
a first information display subsystem having:
   - a first matrix display panel comprising a display matrix;
   - a programmable processing system programmed to present a first set of information related to said first set of parameters on said matrix display; and
   - a digital bus driver for a first, digital communication bus,
a second information display subsystem having:
   - a second, display panel consisting of a non-matrix set of indicators;
   - a non-programmable electronic control circuit for controlling said set of indicators for presenting a second set of information related to parameters from the first and from the second monitoring subsystem.

Preferably, the second information display subsystem comprises an interface for a second, non-programmable, communication bus.

Parameters from the first and from the second monitoring subsystem may be sent directly to the non-programmable electronic control circuit controlling the indicators.

In a preferred embodiment, the second information display subsystem comprises a combining circuit for combining some of the parameters of said second set before transmission over the second communication bus. However, it is also possible, that parameters pertaining to the status of components, such as the temperature of the motor, are conveyed directly to the second information display subsystem.

Preferably, those aims are achieved with the provision of an information display system for an electric or hybrid plane for notifying failures of a plurality of components of the electric or hybrid aircraft, said components including at least one battery pack or at least one electrical motor, the information system comprising: An information display system for an electric or hybrid plane for notifying failures of a plurality of components of the electric or hybrid aircraft, said components including at least one battery pack or at least one electrical motor, the information system comprising:
a first, programmable monitoring subsystem for monitoring said components and delivering a first set of parameters relating to said components;
a second, non-programmable monitoring subsystem for monitoring said components and delivering a second set of parameters relating to said components;
a first information display subsystem having:
   - a first matrix display panel comprising a matrix display;
   - a programmable processing system programmed to present a first set of information related to said first set of parameters on said matrix display; and
   - a digital bus driver configured to receive said first set of parameters over a first, digital communication bus,
a second information display subsystem having:
   - a second, redundant, display panel consisting of a non-matrix set of indicators;
   - a non-programmable, non-stateful electronic control circuit (2148A) for controlling said set of indicators for presenting a second set of information related to said second set of parameters and to at least some parameters from said first set of parameters,
      - an interface for a second, non-programmable, non-stateful analog and/or digital communication bus for receiving said second set of parameters;
a combining circuit for combining some of the parameters of said second set before transmission over said second communication bus.

With respect to the prior art, this information display system provides the advantage that component failures or anticipated component failures, which are likely to result in hazardous or catastrophic failure conditions for the aircraft, are indicated to the driver or the pilot of the aircraft by means of a simple information display subsystem, in addition to or in replacement of a more advanced information display subsystem that relies on programmable and/or stateful components.

This simple information display subsystem, hereafter referred to as the second information display subsystem, may be directed towards the transmission of information pertaining to parameters which may be needed to be notified under applicable certification standards. Such parameters may be indicative severe failure conditions. For example, those parameters may indicate a predefined risk of a hazardous or catastrophic failure or an actual hazardous or catastrophic failure of at least one of the components. Those parameters may also indicate the state of charge of the battery packs, and thus the gauge of the electric powering system. The gauge information may be indicated in different ways, for example and without limitation as a voltage, number of Amperes-hours, Energy, remaining distance of flight, and/or duration of remaining flight.

To minimize the risk of errors, defects or failures, the non-matrix set of indicators of the second display panel are controlled by means of a non-programmable, non-stateful electronic control circuit which does not rely on stateful or programmable information processing systems. Programmable information processing systems, such as systems relying on computers, servers, FPGA, or other programmable components, are more susceptible to errors or failures, and more difficult to certify, than non-programmable, non-stateful electronic control circuits.

The fact that the control of the second display panel resides on a non programmable electronic circuit increases its reliability. It cannot be impacted by software or programming bugs and is more resilient to external interference, such as voltage spikes, electromagnetic interference, or radiation, which could cause a malfunction. As a result, this second information display subsystem may be easier to certify than the first, more complex, sophisticated information display subsystem.

To further enhance the reliability of the system and to facilitate its certification as a result, the second information display subsystem receives second parameters over a second communication bus composed of non-programmable, non-stateful components. The second communication bus can comprise for example communication lines, analog circuits such as amplifiers, comparators, filters, etc, non-programmable, non stateful digital circuits such a logic gates, etc.

The second communication bus does not comprise any processor, any field-programmable gate array (FPGA), or any other programmable component. In one embodiment the second communication bus does not comprise any sequential logic elements such as flip flops, latches, flip flops and similar components for storing the state of a signal or parameter. In an alternative embodiment the second communication bus comprises elements permitting to latch single parameters. These parameters are preferably notified to the pilot, who can then take an appropriate action, such as manually resetting the system.

Likewise, the interface for the second, non-programmable, non-stateful analog and/or digital communication bus can be composed of non-programmable, non-stateful components. This interface can be deprived of any processor, any field-programmable gate array (FPGA), or any other programmable component. The interface preferably does not comprise any sequential logic elements such as flip flops, latches, flip flops and similar components for storing the state of a signal or parameter.

The lack of such programmable, stateful components render the second communication bus and the interface less error prone and less affected by external interference, or by software bugs compared to systems comprising such components.

The first information display subsystem receives component monitoring parameters from a first monitoring subsystem.

The second information display subsystem receives component monitoring parameters from a second monitoring subsystem.

The first monitoring subsystem may include programmable components, such as programme BMS circuits, computers, etc. The second monitoring subsystem comprises only non programmable components, such as sensors, analog electronics, combinational electronic, and is thus also easier to certify than the first monitoring subsystem.

Some components may be monitored simultaneously by the first monitoring subsystem and by the second monitoring subsystem. For example, a single battery module may be monitored simultaneously by an advanced, programmable battery management system (BMS) circuit and by a less advanced, but easier to certify analog monitoring circuit.

Some parameters of some components may be monitored by the first monitoring subsystem and also by the second monitoring subsystem. For example, a temperature of one battery module may be monitored by two different monitoring circuits, one only being programmable.

Information based on parameters received through both, the first non-stateful communication bus and the second communication bus may be notified by means of the non-matrix set of indicators on the second information display.

Even if the second information display system indicates information retrieved from parameters of the first monitoring subsystem, which may be less reliable than the second monitoring subsystem, and potentially uncertified, the second information display system relies on the second monitoring subsystem for all critical information.

The additional parameters from the first monitoring subsystem which are transmitted to the second information display system may be:
non critical. In that case, even if a parameters received from the first monitoring subsystem is inaccurate, this does not affect the safety of the aircraft; and/or
redundant and already determined and received from the second monitoring subsystem. In that case, even if a parameter received from the first monitoring subsystem is inaccurate, the second information display system can still display an accurate or at least safe information based on the corresponding parameters received from the second monitoring subsystem.

In a possible embodiment, the second information display subsystem is connected to the first monitoring subsystem that determines the first parameters through the first, digital communication bus. In this embodiment, the second information display subsystem comprises a communication bus driver in addition to the interface for the second, non-programmable, non-stateful analog and/or digital communication bus.

In another possible embodiment, the second information display subsystem is connected to a monitoring system that determine the first parameters through the second, non-programmable, non-stateful analog and/or digital communication bus.

Information pertaining to a condition of one monitored component may be notified by the second information display subsystem when at least one of the communication bus, either the non-stateful second communication bus, or the programmable first communication bus, transmits parameters notifying of such condition.

For example, a parameter indicative of a severe failure condition causes the second display information panel to alert the pilot or driver of the vehicle of this condition, regardless of whether the parameter has been confirmed by the other communication bus. As a result, a severe failure condition will be alerted through the communication bus which receives failure parameters first. The indicators of the second display panel notify a hazardous or catastrophic condition upon receipt of a relevant alert from at least one of the two communication bus. Therefore, in case of defect or failure of one of the communication systems or of a one of the monitoring subsystems linked to one but not the other communication bus, the parameter indicating the severe failure condition can be transmitted through the other communication bus, such that the alert can be notified by the indicators of the second information display panel. Based on this redundancy in conveying critical information, the risk of false negative information on the second information display panel is even further reduced.

The limited amount of information displayed by means of the set of non-matrix indicators of the second display panel allows for a low level of complexity and thus reduces the risk of malfunctioning of the second information display panel conveying severe failure information and/or misinterpretation of such severe failure information.

The second information display system bypasses the first matrix display controlled by complex programmable processing system comprising software and hardware components, which requires a high level of certification.

In extremely stressful severe failure scenarios, the simplicity and clarity of the display of critical information is crucial in assisting the driver or pilot in his decision making. Any confusion about the significance or the nature of the possible failure needs to be avoided. Due to the simplicity of the second display panel, the failure relevant, critical information may be communicated to the pilot or the driver in a clear and inambiguous manner. In a preferred embodiment, no additional information, which is not required for certification purpose or which is not immediately relevant to a severe failure condition, is communicated by means of the second display panel. A distraction of the pilot or driver by such not immediately relevant information is therefore avoided. The pilot or driver receives only critical, severe failure-relevant information, which is displayed in a simple manner, such as to enable the pilot or driver to respond to a hazardous or catastrophic event quickly and based on the pertinent information.

The second display panel comprises indicators which are preferably configured to generate visual and/or auditory alert signals. Such alert signals may be a warning sound, a pre-recorded voice warning, or other auditory signals. Visual alert signals may for example be based on warning light indicators, which may be triggered when a monitored parameter reached a predefined threshold. Such warning lights can be single lights, for example LED lights, associated with individual parameters or individual monitored components. Such warning lights may also be an array of lights, indicating a safe condition by either illuminating lights in a defined colour, such as green, and indicating anticipated or actual hazardous conditions in a different colour, such as orange or read. The warning lights may be arranged in an array, wherein no or only a limited number of lights are illuminated during safe conditions and wherein a larger number of lights is illuminated to indicate anticipated or actual hazardous conditions.

To enhance the effectiveness of communication, the second display panel may comprise auditory as well as visual signal indicators to notify of a hazardous or catastrophic event. It is furthermore possible to support the auditory and/or visual alerts with tactile signals such as vibrations. Other simple display modes are imaginable. The invention is not limited by the examples of alert signals or indicators provided in this section.

The second display panel should be positioned in the cockpit of the aircraft in such a way that the signals are readily visible or audible to the pilot or the driver.

Both communication bus may convey signals relating to the same components.

The first digital communication bus may convey signals pertaining to more components than the second communication bus.

Both communication bus may convey signals relating to the same parameters of these components.

One communication bus, such as the first, digital communication bus, may convey signals relating to more parameters of those components than the other communication bus.

This redundancy, or partial redundancy, adds again to the reliability of the information displayed and the information display system, and on the second display panel in particular, rendering the system more apt to satisfy the required certification standards.

It is furthermore possible, that the two distinct communication bus, i.e. the first and the second communication bus, each feature an internal redundancy such that there is double redundancy of the parameters transmitted to the second display panel.

Information pertaining to the monitored components of the aircraft may be notified to the pilot or driver on the first matrix display panel.

This first display panel presents a wider range of information concerning the status of the monitored components and it is configured to do this in greater detail and/or enhanced granularity.

Preferably, the first monitor also communicates the highly relevant information related to the parameters, which identify hazardous or catastrophic events and/or conditions.

The first matrix display panel may be suited to present additional information regarding the monitored components. Such information may include precise actual and past values of monitored parameters, it may also include predictions of values or change of state if certain conditions or settings are maintained. The first matrix display panel may be controlled by the programmable processing system which can be programmed to convert received signals into the required information. As such, the first, matrix panel is not particularly limited as to the type of information displayed on it.

It may also be desirable to present information to the pilot or driver, which is not directly linked to the monitored components, but may nonetheless be relevant for the operation of the aircraft. The first information display subsystem may be suited to receive and process further parameters and to be programmed to display the desired or required additional information.

The focus of the second display system on pre-defined essential, redundantly received information and on minimising the complexity of its transmission to the pilot or driver of the aircraft makes it particularly suited for alerting of severe failure conditions.

In order to keep the number of electrical wires and cables connected to the second information display panel, and in particular to its electronic control circuit, low, some signals transmitted over the second communication bus may be combined together with at least one combining circuit.

The combining circuit may include a multiplexer, and/or a combinational logic.

The combining circuit may be configured to combine parameters from a plurality of monitored components and to output to the non-programmable, non-stateful electronic control circuit.

For example, the combining circuit may include a multiplexer for combining signals or parameters delivered by a plurality of battery monitoring systems (BMS) circuits and transmitting them over a reduced number of combination lines.

The combining circuit may include a logic gate, such as for example an OR gate, for combining alert parameters from a plurality of components monitoring circuits, such as a plurality of BMS, into one combined parameter. Therefore, if at least one of the combined parameter indicates a failure condition, such as for example an excessive temperature, voltage, current, pressure, etc, the combined parameter that will be transmitted over the second communication bus and result in a display of information on the second display panel will have a positive value to indicate this failure.

In one aspect of this invention, the second communication bus is configured to transmit analog signals only. In an alternative aspect of this invention, the second communication bus is configured to transmit binary digital signals, for example digital signals generated by means of a comparator or an analog/digital converter. The second communication bus is preferably not configured to transmit multivalued digital signals.

The first matrix display panel supports the pilot or driver also under conditions, in which no hazardous or catastrophic failure is expected. However, should hazardous conditions be detected, these will preferably also be notified through the first information display subsystem.

The matrix display of the first information display subsystem is controlled through the programmable processing system receiving input parameters through the digital bus driver. The digital communication bus transmitting the first parameters may for example be a Controller Area Network (CAN) bus or RS485 bus.

The primary purpose of the first information display subsystem is the presentation of information. However, the first information display subsystem may also be configured to receive input information or input commands from a user, for example by means of a suitable user interface, which may include a tactile screen, a keyboard, a keypad, a mouse, a voice interface, etc. This functionality is particularly useful if the pilot or driver of the aircraft wishes to select a specific type of information for display or to input additional information, which may or may not be directly related to the monitored parameters.

In a preferred aspect of this invention, the second parameters may include parameters indicative of the state of health of a battery pack and/or of individual battery cells or battery modules comprised in the battery pack, and/or to the load of a monitored power supply component.

Some of the parameters may be determined and/or transmitted by battery management systems (BMS) circuits associated with individual battery cells or to individual battery modules.

Such parameters may include temperature, voltage and/or current of individual battery cells, of battery modules and/or of one entire battery pack.

Such parameters may include of state of charge of individual battery cells, of battery modules, of one battery pack, or of fall battery packs.

The second parameters may include parameters indicating hazardous failures of the electrical motor of the aircraft, such as temperature, voltage, current, rotation frequency of the motor, and/or parameters indicative of the state of electrical isolation of individual components of the plane high voltage system, its motor, and/or the batteries.

The second parameters may also include parameters pertaining to a motor controller. Such parameters may for example be temperature, voltage, current, sense of rotation and/or electrical frequency in the motor controller.

Battery pack, electrical motor and or motor controller could for example be equipped with one or more sensors (as monitoring circuits) for measuring the relevant parameters.

Such sensors could, for example, determine the temperature in proximity to one or more battery cells, battery modules or battery packs, respectively the motor and/or the motor controller and output a signal representative of this temperature, or a digital signal indicating whether the temperature is above or below a defined temperature threshold. This could for example be indicative of a high temperature, or a low temperature condition indicative of an unsafe condition. The information regarding the actual value of the temperature, and/or a detected over- or an under-temperature condition can then be notified through the second information display subsystem and the first information display subsystem to the pilot or driver of the aircraft.

To measure voltage and/or current of batteries, of the electrical motor, and/or of the motor controller, sensors arranged to detect an actual value of voltage respectively current, and/or to detect an undervoltage condition, an overvoltage condition, an undercurrent condition, an overcurrent condition, an excessive internal resistance condition, a low internal resistance condition, of a monitored component could be used.

Sensors could furthermore be arranged to detect a pressure value, and/or an underpressure condition or an overpressure condition of a component.

Fire and/or smoke detection sensors may be used. Parameters may include a fire detection and/or a smoke detection parameter.

This invention further concerns an aircraft monitoring system comprising the information system described herein.

### Short description of the drawings

Exemplar embodiments of the invention are disclosed in the description and illustrated by the drawings in which:
**Fig. 1A** illustrates an aircraft, such as an electric or hybrid aircraft;
**Fig. 1B** illustrates a simplified block diagram of an aircraft;
**Fig. 2** illustrates management systems for operating an aircraft;
**Fig. 3** illustrates an battery monitoring system for an aircraft;
**Figs. 4 and 5** illustrate implementations of battery monitoring circuits;
**Figs. 6 and 7** illustrate implementations of master circuits for monitoring battery monitoring circuits;
**Fig. 8** illustrates a schematic view of implementation of a power management system;
**Fig. 9** illustrates an aircraft monitoring system for an electric or hybrid airplane, the aircraft monitoring system having different subsystems for monitoring and alerting of failures of a component of the electric or hybrid aircraft;
**Fig. 10A** illustrates a schematic view of implementations of a first possible embodiment of the information display system; and
**Fig. 10B** illustrates a schematic view of implementations of a second possible embodiment of the information display system.
**Fig. 10C** illustrates a schematic view of implementations of a third possible embodiment of the information display system.

### Detailed Description

### System Overview

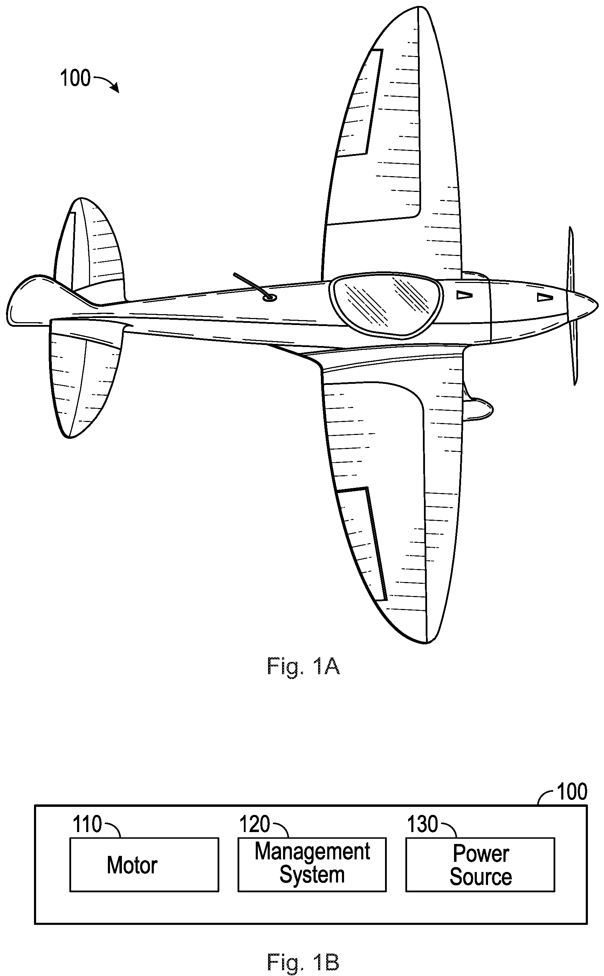

Fig. 1A illustrates an aircraft 100, such as an electric or hybrid aircraft, and Fig. 1B illustrates a simplified block diagram of the aircraft 100. The aircraft 100 includes a motor 110, a management system 120, and a power source 130. The motor 110 can be used to propel the aircraft 100 and cause the aircraft 100 to fly and navigate. The management system 120 can control and monitor the components (equipments) of the aircraft 100, such as the motor 110 and the power source 130. The power source 130 can power the motor 110 to drive the aircraft 100 and power the management system 120 to enable operations of the management system 120. The management system 120 can include one or more motor controllers as well as other electronic circuitry for controlling and monitoring various components of the aircraft 100.

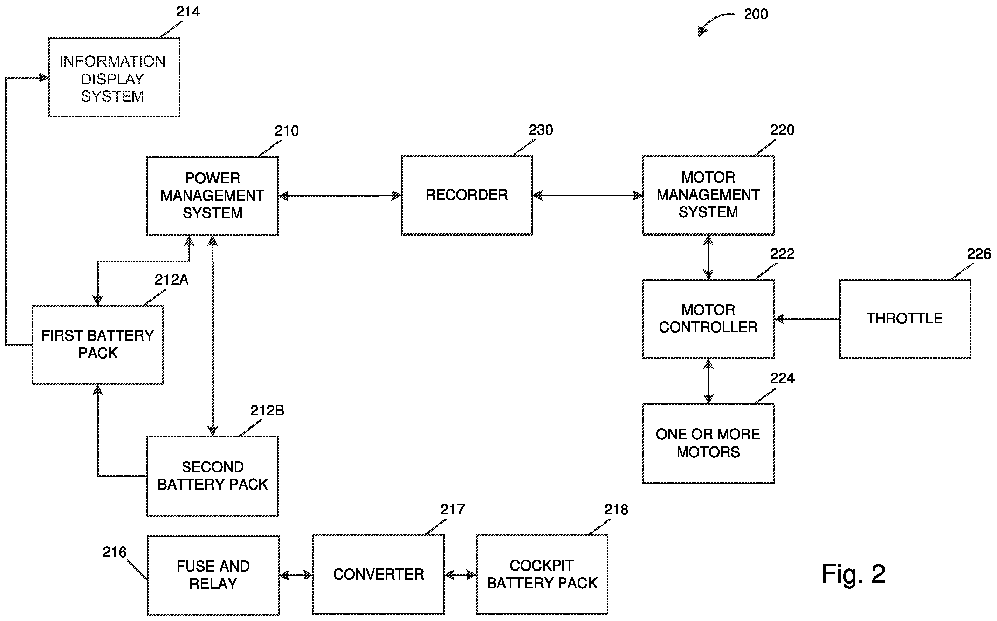

Fig. 2 illustrates components 200 of an aircraft, such as the aircraft 100 of Figs. 1A and 1B. The components 200 can include a power management system 210, a motor management system 220, and a recorder 230, as well as a first battery pack 212A, a second battery pack 212B, at least one warning panel 214, a fuse and relay 216, a converter 217, a cockpit battery pack 218, a motor controller 222, one or more motors 224, and a throttle 226.

The power management system 210, the motor management system 220, and the recorder 230 can monitor communications on a communication bus, such as a controller area network (CAN) bus, and communicate via the communication bus. The first battery pack 212A and the second battery pack 212B can, for instance, communicate on the communication bus enabling the power management system 210 to monitor and control the first battery pack 212A and the second battery pack 212B. As another example, the motor controller 222 can communicate on the communication bus enabling the motor management system 220 to monitor and control the motor controller 222.

The recorder 230 can store some or all data communicated (such as component status, temperature, or over/undervoltage information from the components or other sensors) on the communication bus to a memory device for later reference, such as for reference by the power management system 210 or the motor management system 220 or for use in troubleshooting or debugging by a maintenance worker. The power management system 210 and the motor management system 220 can each output or include a user interface that presents status information and permits system configurations. The power management system 210 can control a charging process (for instance, a charge timing, current level, or voltage level) for the aircraft when the aircraft is coupled to an external power source to charge a power source of the aircraft, such as the first battery pack 212A or the second battery pack 212B.

The information display system 214 include a plurality of displays panel that alert a pilot or another individual or computer to an issue, such as a problem associated with a power source like the first battery pack 212A.

The fuse and relay 216 can be associated with the first battery pack 212A and the second battery pack 212B and usable to transfer power through a converter 217 (for example, a DC-DC converter) to a cockpit battery pack 218. The fuse and relay 216 can protect one or more battery poles of the first battery pack 212A and the second battery pack 212B from a short or overcurrent. The cockpit battery pack 218 may supply power for the communication bus.

The motor management system 220 can provide control commands to the motor controller 222, which can in turn be used to operate the one or more motors 224. The motor controller can include an inverter for generating AC currents that are needed for operating the one or more motors. The motor controller 222 may further operate according to instructions from the throttle 226 that may be controlled by a pilot of the aircraft. The one or more motors can include an electric brushless motor.

The power management system 210 and the motor management system 220 can execute the same or similar software instructions and may perform the same or similar functions as one another. The power management system 210, however, may be primarily responsible for power management functions while the motor management system 220 may be secondarily responsible for the power management functions. Similarly, the motor management system 220 may be primarily responsible for motor management functions while the power management system 210 may be secondarily responsible for the motor management functions. The power management system 210 and the motor management system 220 can be assigned respective functions, for example, according to system configurations, such as one or more memory flags in memory that indicate a desired functionality. The power management system 210 and the motor management system 220 may include the same or similar computer hardware.

The power management system 210 can automatically perform the motor management functions when the motor management system 220 is not operational (such as in the event of a rebooting or failure of the motor management system 220), and the motor management system 220 can automatically perform the power management functions when the power management system 210 is not operational (such as in the event of rebooting or failure of the power management system 210). Moreover, the power management system 210 and the motor management system 220 can take over the functions from one another without communicating operation data, such as data about one or more of the components being controlled or monitored by the power management system 210 and the motor management system 220. This can be because both the power management system 210 and the motor management system 220 may be consistently monitoring communications on the communication bus to generate control information, but the control information may be used if the power management system 210 and the motor management system 220 has primary responsibility but not if the power management system 210 and the motor management system 220 does not have primary responsibility. Additionally or alternatively, the power management system 210 and the motor management system 220 may access data stored by the recorder 230 to obtain information usable to take over primary responsibility.

### System Architecture

Electric and hybrid aircraft (rather than aircraft powered during operation by combustion) have been designed and manufactured for decades. However, electric and hybrid aircraft have still not yet become widely used for most transport applications like carrying passengers or goods.

This failure to adopt may be in large part because designing an aircraft that is sufficiently safe to be certified by certification authorities may be very difficult. The certification of prototypes may moreover not be sufficient to certify for commercial applications. Instead, a certification of each individual aircraft and its components may be required.

This disclosure provides at least some approaches for constructing electric powered aircraft from components and systems that have been designed to pass certification requirements so that the aircraft itself may pass certification requirements and proceed to active commercial use.

Certification requirements can be related to a safety risk analysis. A condition that may occur with an aircraft or its components can be assigned to one of multiple safety risk assessments, which may in turn be associated with a particular certification standard. The condition can, for example, be catastrophic, hazardous, major, minor, or no safety effect. A catastrophic condition may be one that likely results in multiple fatalities or loss of the aircraft. A hazardous condition may reduce the capability of the aircraft or the operator ability to cope with adverse conditions to the extent that there would be a large reduction in safety margin or functional capability crew physical distress/excessive workload such that operators cannot be relied upon to perform required tasks accurately or completely or serious or fatal injury to small number of occupants of aircraft (except operators) or fatal injury to ground personnel or general public. A major condition can reduce the capability of the aircraft or the operators to cope with adverse operating condition to the extent that there would be a significant reduction in safety margin or functional capability, significant increase in operator workload, conditions impairing operator efficiency or creating significant discomfort physical distress to occupants of aircraft (except operator), which can include injuries, major occupational illness, major environmental damage, or major property damage. A minor condition may not significantly reduce system safety such that actions required by operators are well within their capabilities and may include a slight reduction in safety margin or functional capabilities, slight increase in workload such as routine flight plan changes, some physical discomfort to occupants or aircraft (except operators), minor occupational illness, minor environmental damage, or minor property damage. A no safety effect condition may be one that has no effect on safety.

An aircraft can be designed so that different monitoring subsystems, such as battery monitoring circuits, of the aircraft are constructed to have a robustness corresponding to their responsibilities and any related certification standards, as well as potentially any subsystem redundancies. Said aircraft can furthermore be designed so that different information display subsystems, comprising communication bus and display panels, notify information to the pilot or the driver.

Where a potential failure of the responsibilities of a monitoring subsystem or an information display subsystem would likely be catastrophic, the subsystems can be designed to be simple and robust and thus may be able to satisfy difficult certification standards. The monitoring subsystem, for instance a battery, motor or motor controller monitoring circuit, or the information display subsystem can be composed of non-programmable, non-stateful components (for example, analog or non-programmable combinational logic electronic components) rather than programmable components (for example, a processor, a field programmable gate array (FPGA), or a complex programmable logic device (CPLD)) or stateful components (for example, sequential logic electronic components).

On the other hand, where either (i) a monitoring subsystem and/or an information display subsystem of an aircraft monitors or notifies a parameter redundantly with another subsystem of the aircraft that is composed of non-programmable, non-stateful components or (ii) a potential failure of the responsibilities of such a monitoring and/or information display subsystem would likely be less than catastrophic, or less than hazardous, the subsystem can be at least partly digital and designed to be complicated, feature-rich, and easier to update and yet able to satisfy associated certification standards. Such a monitoring and/or a information display subsystem can, for instance, include a processor or other programmable components.

A monitoring subsystem comprising non-programmable, non-stateful components, such as sensors and associated electronic, could output information to an information display subsystem comprising non-programmable, non-stateful components. A more complex, feature rich monitoring system could output information to a more sophisticated information display subsystem having a matrix display panel and programmable processing system for controlling this matrix display panel.

. The information display system may be installed within or near the cockpit or the aircraft. The monitoring subsystems may be installed on, within or near the components to be monitored. The monitoring subsystems and the information display subsystems may be connected thhrough communication buses, such as to convey parameters concerning the monitored components of the aircraft to the pilot or the driver.

The information display system comprises at least two subsystems, one being programmable and stateful and therefore better suited to convey a large amount and/or complex information for presentation on a sophisticated matrix display. A second information display subsystem is simpler, comprises non-programmable, non-stateful components and is configured to raise an alert by means of a set of indicators.

Some or all hazardous or catastrophic conditions monitored for by an aircraft may be monitored for with at least one monitoring subsystem that does not include a programmable component or a stateful component.

Some or all hazardous or catastrophic conditions may be communicated through a second, simpler information display subsystem, which does not rely on programmable or stateful components for raising an alert. Preferably, this second information display subsystem comprises non-programmable, non-stateful components only because certifications for programmable components or stateful components may demand statistical analysis of the responsible subsystems, which can be very expensive and complicated to certify.

This simpler, second information display subsystem may be connected to the non-programmable, non-stateful monitoring subsystem for receiving parameters suited to indicate some or all hazardous or catastrophic conditions. Such implementations are counterintuitive at least because an electric or hybrid aircraft may include one or more relatively advanced programmable or stateful components to enable operation of the electric or hybrid aircraft, so the inclusion of one or more subsystems in the aircraft that does not include any programmable components or any stateful components may be unexpected because the one or more relatively advanced programmable or stateful components may be readily and easily able to implement the functionality of the one or more subsystems that does not include any programmable components or any stateful components.

An aircraft monitoring system can include a first monitoring subsystem and a second monitoring subsystem. The second monitoring subsystem, such as a second battery monitoring circuit, can be supported by an aircraft housing and include non-programmable, non-stateful components, such as analog or non-programmable combinational logic electronic components. The non-programmable, non-stateful components can monitor a component (such as battery cells in a battery pack) supported by the aircraft housing. The aircraft monitoring subsystems may feed parameters relating to the monitored components of the aircraft into the information display subsystems of the present invention.

An aircraft information display system comprises the first information display subsystem composed of programmable components and the second information display subsystem having a non-matrix display with set of indicators for outputting an alert to notify of a hazardous or catastrophic condition associated with the component. An indicator of the second information display subsystem may for example raise a visual or an audible alarm.

Additionally or alternatively, the non-programmable, non-stateful components of the second information display subsystem can output the second alert to a computer aboard or remote from the aircraft (for example, to automatically trigger actions to attempt to respond to or address the catastrophic condition, such as to stop charging or activate a fire extinguisher, a parachute, or an emergency landing procedure or other emergency response feature) or an operator of the aircraft via a telemetry system. The non-programmable, non-stateful components may, moreover, not be able to control the component or at least control certain functionality of the component, such as to control a mode or trigger an operation of the component.

The first monitoring subsystem, such as a first battery monitoring circuit, can include a processor (or another programmable or stateful component, such as a BMS circuit). Preferably the first monitoring system communicates a set of parameters relating to the monitored component of components over a programmable, digital communication bus to the first information display subsystem comprising a matrix display panel and a programmable processing system including, preferably, a processor. The processor can monitor the component from communications on the communication bus and output a first alert to notify of a catastrophic condition or a less than catastrophic condition associated with the component through the matrix display panel. The processor can, for instance, activate an indicator or audible alarm for a passenger aboard the housing to output the first alert. Additionally or alternatively, the processor can output the first alert to a computer aboard or remote from the aircraft (for example, to automatically trigger actions to attempt to address the catastrophic condition, such as to activate a fire extinguisher, a parachute, or an emergency landing procedure) or an operator of the aircraft via a telemetry system. The processor may control the component.

The second information display subsystem may receive parameters from the non-programmable, non-stateful components of the second monitoring subsystem only. In this implementation, an alert information may be notified on the basis of parameters which are monitored and transmitted exclusively by means of non-programmable, non-stateful components of the second monitoring subsystem. Even though, given the complexity of the monitored components, this may be counterintuitive, this embodiment provides the significant advantage that this alert system is devoid of some of the major hurdles for certification, i.e. programmable components, software, etc.

It is however also possible that the second information display subsystem receives parameters from the first, programmable monitoring subsystem, in addition to the parameters received from the second monitoring subsystem.

The first information display subsystem preferably receives input information from the programmable first monitoring subsystem. It may however also receive additional parameters from the second, non-programmable monitoring subsystem.

Examples of the above-described design of a monitoring system comprising two subsystem are next presented in the context of battery management systems. Notably, the design can be additionally or alternatively applied to other systems of a vehicle that perform functions other than battery management, such as motor and motor control.

### Battery Management Example

Battery packs including multiple battery cells, such as lithium-ion cells, can be used in electric cars, electric aircraft, and other electric self-powered vehicles. The battery cells may be connected in series or in parallel to deliver an appropriate voltage and current.

Battery cells in battery packs can be managed and controlled by battery management systems (BMS). A BMS can be a circuit that manages a rechargeable battery cell by controlling its charging and discharge cycles, preventing it from operating outside its safe operating area, balancing the charge between cells, or the like. BMS can also monitor battery parameters, such as the temperature, voltage, current, internal resistance, or pressure of the battery cell, and report anomalies. BMS can be provided by various manufacturers as discreet electronic components.

Damage to battery cells can be very serious incidents that may cause fire, explosions, or interruption of the powered circuit. Therefore, any damage to a battery in a vehicle, such as an electric airplane, may desirably be reported immediately and reliably to the pilot or driver of the vehicle. A reliable monitoring of battery cells by BMS can be critical for the safety of electric airplanes.

However, BMS can have failings in rare occurrences that cause problems with battery cells which may not be reported correctly. For example, an overvoltage or overtemperature condition can, in some situations, affect not only a battery cell, but also its BMS, so that the failure of the battery cell is either not detected or not reported correctly. Even if the BMS functions correctly, a connecting bus between the BMS and the cockpit might be defective and prevent warning signals from being transmitted.

In order to prevent this risk, battery cells can be monitored with a second, redundant BMS. If both BMS are of the same type, a defect or conception flaw that affects one BMS may also affect the redundant BMS as well, so that the gain in reliability can be limited. The present disclosure provides at least approaches to increase the reliability of the detection of malfunctions of battery cells in an electric vehicle, such as an electric aircraft. Redundant monitoring of parameters of each battery cell can be performed with two different circuits. Because a second, redundant monitoring circuit may include non-programmable, non-stateful components rather than processors, sequential logic electronic components, or programmable combinational logic electronic components, its certification can be easier, and its reliability may be increased.

The second, redundant monitoring circuit can provide for a redundant monitoring of battery parameters and for a redundant transmission of those parameters, or warning signals depending on those parameters. The second battery monitoring system may transmit analog or digital signals but preferably not multivalued digital signals. The second battery monitoring circuit may not manage the charge and discharge of battery cells, but instead provide for monitoring of battery parameters, and transmission of parameters or warning signals. Therefore, the second, redundant battery monitoring circuit can be made simple, easy to certify, and reliable.

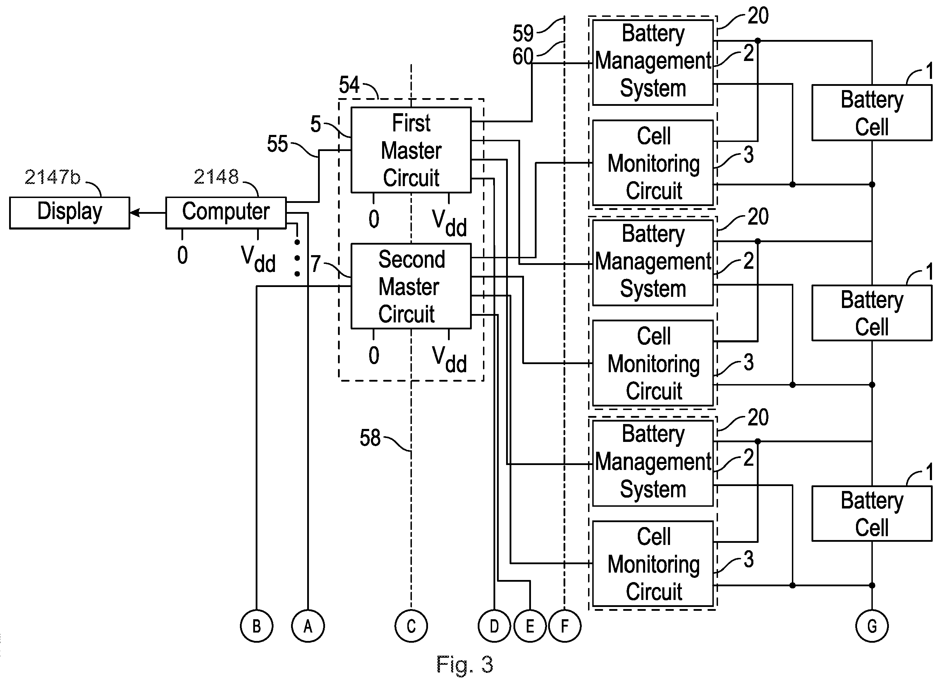

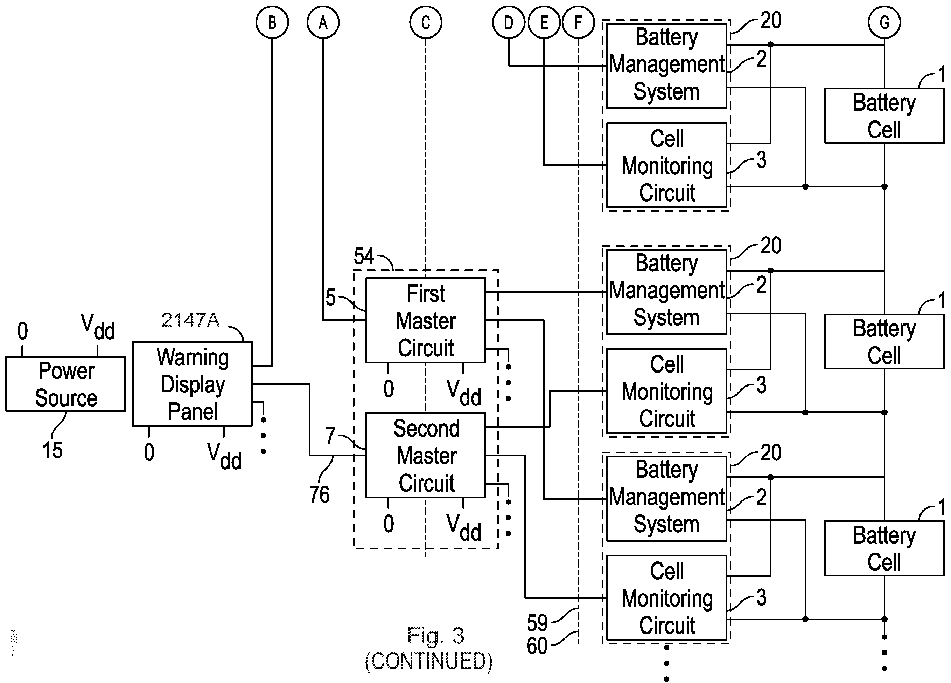

Fig. 3 illustrates a battery monitoring system. This system can be used in an electric vehicle, such as an electric aircraft, a large size drone or unmanned aerial vehicle, an electric car, or the like, to monitor the state of battery cells 1 in one of multiple battery packs and report this state or generate warning signals in case of dysfunctions.

The battery cells 1 can be connected in series or in parallel to deliver a desired voltage and current. Fig. 3 shows serially connected battery cells. The total number of battery cells 1 may exceed 100 cells in an electric aircraft. Each of the battery cells 1 can be made up of multiple elementary battery cells in parallel.

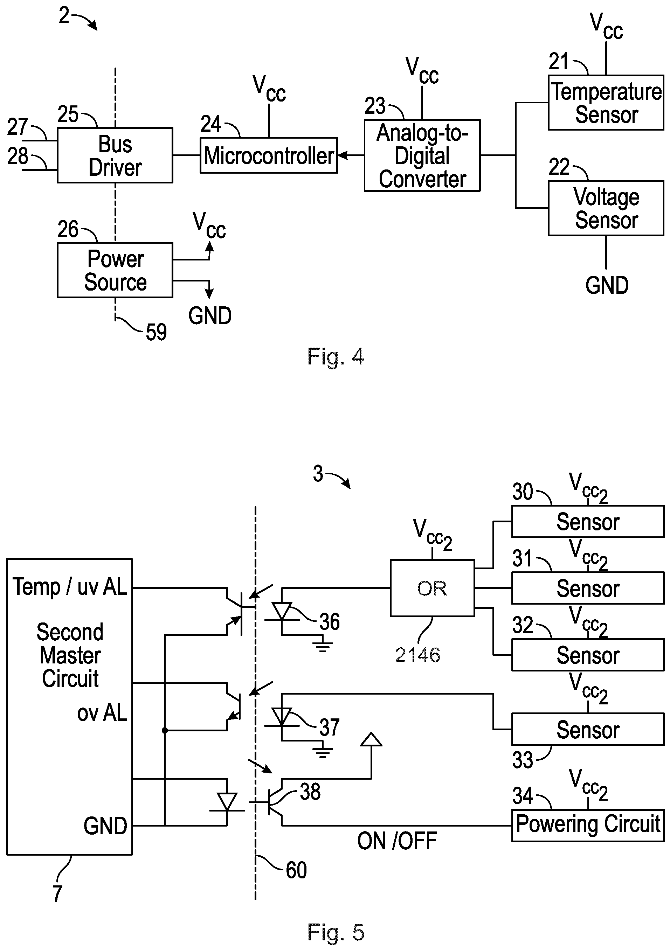

A first battery monitoring circuit can control and monitor the state of each battery cell 1. The first battery management circuit can include multiple BMSs 2, each of the BMSs 2 managing and controlling one of the battery cells 1. The BMSs 2 can each be made up of an integrated circuit (for instance, a dedicated integrated circuit) mounted on one printed circuit board (PCB) of the PCBs 20. One of the PCBs 20 can be used for each of the battery cells 1 or for a group of battery cells. Fig. 4 illustrates example components of one of the BMSs 2.

The control of a battery cell can include control of its charging and discharge cycles, preventing a battery cell from operating outside its safe operating area, or balancing the charge between different cells.

The monitoring of one of the battery cells 1 by one of the BMSs 2 can include measuring parameters of the one of the battery cells 1, to detect and report its condition and possible dysfunctions. The measurement of the parameters can be performed with battery cell parameter sensors, which can be integrated in the one of the BMSs 2 or connected to the one of the BMSs 2. Examples of such parameter sensors can include a temperature sensor 21, a voltage sensor 22, or a current sensor. An analog-to-digital converter 23 can convert the analog values measured by one or more of the parameter sensors into multivalued digital values, for example, 8 or 16 bits digital parameter values. A microcontroller 24, which can be part of each of the BMSs 2, can compare the values with thresholds to detect when a battery cell temperature, battery cell voltage, or battery cell current is outside a range.

The BMSs 2 as slaves can be controlled by one of multiple first master circuits 5. In the example of Fig. 3, each of the first master circuits 5 can control four of the BMSs 2. Each of the first master circuits 5 can control eight of the BMSs 2, or more than eight of the BMSs 2. The first master circuits 5 can control more BMS and more battery cells in yet other implementations. The first master circuits 5 can be connected and communicate over a one or a plurality of communication buses 55.

The first master circuits 5 can also be connected to a processing system 2148, such as a programmable processing system 2148B, possibly including a computer, for example a board computer, that collects the parameters received through various digital signals sent by the first master circuits 5, and may display information related to the battery state and warning signals on a display panel 2147, such as a matrix display 2147B. The display panel 2147 may be mounted in the vehicle's cockpit to be visible by the vehicle's driver or pilot. Additionally or alternatively, the programmable processing system 2147B can output the information to a computer remote from the aircraft or to control operations of one or more components of the aircraft as described herein.

The master circuits 5 also acts as combining circuits for combining at least some of the parameters of a plurality of controlled BMS 2 and reducing the numbers of parameters to be sent to the display panel(s).

The BMSs 2 can be connected to the first master circuits 5 over a digital communication bus, such as a CAN bus, and Ethernet bus, etc. A bus driver 25 can interface the microcontroller 24 with the digital communication bus and provide a first galvanic isolation 59 between the PCBs 20 and the first master circuits 5. In one example, the bus drivers of adjacent BMSs 2 can be daisy chained. For example, as shown in Fig. 4, the bus driver 25 is connected to the bus driver 27 of the previous BMS and to the bus driver 28 of the next BMS.

Each of the BMSs 2 and their associated microcontrollers can be rebooted by switching its power voltage Vcc. The interruption of Vcc can be controlled by the first master circuits 5 over the digital communication bus and a power source 26.

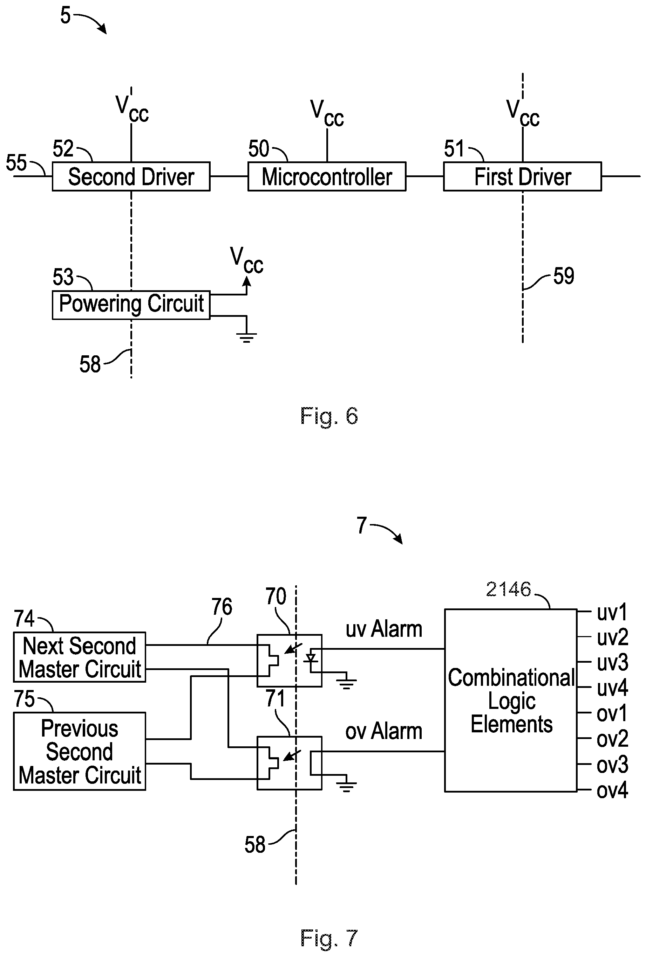

Fig. 6 illustrates example components of one of the first master circuits 5. The one of the first master circuits 5 can include a first driver 51 for connecting the one of the first master circuits 5 with one of the BMSs 2 over the digital communication bus, a microcontroller 50, and a second driver 52 for connecting the first master circuits 5 between themselves and with the computer 9 over a second digital communication bus 55, such as a CAN bus or other packet-based bus. A second galvanic isolation 58 can be provided between the first and second master circuits 5, 7 and the computer 9. The second galvanic isolation 58 can, for example, be 1500 VDC, 2500 Vrms, 3750 Vrms, or another magnitude of isolation. The microcontroller 50, the first driver 51, and the second driver 52 can be powered by a powering circuit 53 and may be mounted on a PCB 54, one such PCB can be provided for each of the first master circuits 5.

Fig. 3 further illustrates a second battery monitoring circuit, which can be redundant of the first battery monitoring circuit. This second battery monitoring circuit may not manage the battery cells 1; for example, the second battery monitoring circuit may not control charge or discharge cycles of the battery cells 1. The function of the second battery monitoring circuit can instead be to provide a separate, redundant monitoring of each of the battery cells 1 in the battery packs, and to transmit those parameters or warning signals related to those parameters, such as to the pilot or driver or a computer aboard or remote from the aircraft as described herein. The second battery monitoring circuit can monitor the state of each of the battery cells 1 independently from the first battery monitoring circuit. The second battery monitoring circuit can include one of multiple cell monitoring circuits 3 for each of the battery cells. The parameters or warning signals may moreover, for example, be used by the second battery monitoring circuit to stop charging (for instance, by opening a relay to disconnect supply of power) of one or more battery cells when the one or more battery cells may be full of energy and a computer of the aircraft continues to charge the one or more battery cells.

Fig. 5 illustrates example components of one of the cell monitoring circuits 3. Each of the cell monitoring circuits 3 can include multiple cell parameter sensors 30, 31, 32, 33 for measuring various parameters of one of the battery cells 1. The sensor 30 can measure a first temperature at a first location in one battery cell and detect an overtemperature condition; the sensor 31 can measure a second temperature at a second location in the same battery cell and detect an overtemperature condition; the sensor 32 can detect an undervoltage condition in the same battery cell; and the sensor 33 can detect an overvoltage condition on the same battery cell. The undervoltage condition can be detected, for example, when the voltage at the output of one battery cell is under 3.1 Volts or another threshold. The overvoltage condition might be detected, for example, when the voltage at the output of one battery cell is above 4.2 Volts or yet another threshold. The thresholds used can depend, for instance, on the type of battery cell 1 or a number of elementary cells in the cell. Therefore, each or some of the sensors 30-33 can include a sensor as such and an analog comparator for comparing the value delivered by the sensor with one or two thresholds, and outputting a binary value depending on the result of the comparison. Other battery cell parameter sensors, such as an overcurrent detecting sensor, can be used in other implementations.

Various parameters related to one of the battery cells 1 can be combined using a combinational logic circuit 2146, such as an OR gate. The combinational logic circuit 35 may not include programmable logic. In the example of Fig. 5, binary signals output by the sensors 30, 31, and 32 are combined by a Boolean OR gate into a single warning signal, which can have a positive value (warning signal) if and only if the temperature measured by one of the two temperature sensors exceeds a temperature threshold and if the voltage of the cell is under a voltage threshold. The detection of an overvoltage condition by the sensor 33, in the example of Fig. 5, may not be combined with any other measure and can be directly used as a warning signal.

The warning signals delivered by the combinational logic 35 or directly by the parameter sensors 30-33 can be transmitted to a second master circuit 7 over lines 76 of a second communication bus 2143A, which can be dedicated and different from the digital communication bus 2143B used by the first battery monitoring circuit. Optocouplers 36, 37, 38 provide a third galvanic isolation 60 between the components 30-38 and the second master circuit 7. The third galvanic isolation 60 can provide the same isolation as the first galvanic isolation 59, such as 30V isolation, or the third galvanic isolation 60 may provide a different isolation form the first galvanic isolation 59.

The master circuit 7 also acts as combining circuit for combining at least some of the parameters of a plurality of controlled BMS 2 and reducing the numbers of parameters to be sent to the display panel(s). The sensors 30-33 and the combinational logic element 35 can be powered by a powering circuit 34 that delivers a power voltage Vcc2. This powering circuit 34 can be reset from the second master circuit 7 using an ON/OFF signal transmitted over the optocoupler 38.

The sensors 30-33 and the combinational logic element 35 can be mounted on a PCB. One such PCB can be provided for each of the battery cells 1. The sensors 30-33 and the combinational logic element 35 can be mounted on the same PCB 20 as one of the BMSs 2 of the first battery monitoring circuit.

Fig. 7 illustrates example components of one of the second master circuits 7. In the example of Fig. 7, the one of the second master circuits 7 can include a combinational logic element 72, which may not include programmable logic, for combining warning signals, such as overtemperature/under- voltage warning signals uv1, uv2, ... or overvoltage signals ov1, ov2, ... from different battery cells into combined warning signals, such as a general uv (undervoltage condition in case of overtemperature) warning signal and a separate overvoltage warning signal ov. Those warning signals uv, ov can be active when any of the battery cells 1 monitored by the one of the second master circuits 7 has a failure. They can be transmitted over optocouplers 70, 71 and lines 76 to the next and previous second master circuits 74, 75, and to a display panel 2147A in the cockpit of the vehicle for displaying warning signals to the driver or pilot. The warning display panel 2147A can include lights, such as light emitting diodes (LEDs), for displaying warning signals. A plurality of slaves may be connected in a daisy chain. One master circuit may be provided for each battery pack.

With the disclosed design of the cell monitoring circuits 3 and the second master circuits 7, no dormant alarms may remain undetected. For example, if a cable may be broken or a power supply is inactive, the display panel 2147A can correctly show an alarm despite the broken cable or the inactive power supply. This can be accomplished, for instance, by using an inverted logic so that if the display panel 2147A does not receive a voltage or a current on an alarm line, an indicator may activate, but if the display panel 2147A does receive the voltage or the current on the alarm line, the indicator can deactivate.

The one of the second master circuits 7 can be mounted on a PCB. One such PCB can be provided for each of the second master circuits 7. One of the second master circuits 7 can be mounted on the same PCB 54 as one of the first master circuits 5 of the first battery monitoring circuit.

As can be seen, the second battery monitoring circuit can include exclusively non-programmable, non-stateful components (such as, analog components or non-programmable combinational logic components). The second battery monitoring circuit can be processorless, and may not include any sequential or programmable combinational logic. The second battery monitoring circuit may not run any computer code or be programmable. This simplicity can provide for a very reliable second monitoring circuit, and for a simple certification of the second battery monitoring circuit and an entire system that include the second battery monitoring circuit.

The second battery monitoring circuit can be built so that any faulty line, components, or power source triggers an alarm. In one example, an "0" on a line, which may be caused by the detection of a problem in a cell or by a defective sensor, line, or electronic component, can be signaled as an alarm on the warning panel; the alarm may only be removed when all the monitored cells and all the monitoring components are functioning properly. For example, if the voltage comparator or temperature sensor is broken, an alarm can be triggered.

The programmable processing system 2148B, the display panel 2147B and the display panel 2147A in the cockpit can be powered by a power source 15 in the cockpit, which may be a cockpit battery and can be independent of other power sources used to power one or more other components.

### Motor and Battery System

Battery packs including multiple battery cells, such as lithium-ion cells, can be used in electric cars, electric aircraft, and other electric self-powered vehicles. The battery cells can be connected in series or in parallel to deliver an appropriate voltage and current.

In electrically driven aircraft, the battery packs can be chosen to fulfill the electrical requirements for various flight modes. During short time periods like take off, the electrical motor can utilize a relatively high power. During most of the time, such as in the standard flight mode, the electrical motor can utilize a relatively lower power, but may consume a high energy for achieving long distances of travel. It can be difficult for a single battery to achieve these two power utilizations.

The use of two battery packs with different power or energy characteristics can optimize the use of the stored energy for different flight conditions. For example, a first battery pack can be used for standard flight situations, where high power output may not be demanded, but a high energy output may be demanded. A second battery pack can be used, alone or in addition to the first battery pack, for flight situations with high power output demands, such as take-off maneuvering.

An electrical powering system can charge the second battery pack from the first battery pack. This can allow recharging of the second battery pack during the flight, subsequent to the second battery pack being used in a high power output demanding flight situation. Therefore, the second battery pack can be small, which can save space and weight. In addition, this can allow different battery packs for different flight situations that optimize the use of the battery packs.

The electrical powering system can also charge the second battery pack by at least one motor which works as generator (the motor may also accordingly be referred to as a transducer). This can allow recharging of the second battery pack during the flight or after the second battery pack has been used in a high power output demanding flight situation. Therefore, the second battery pack can be small, which can save space and weight. In addition, the different battery packs can allow the recovery of braking energy. Braking energy during landing or sinking recovered by a generator motor can create high currents which may not be recovered by battery packs used for traveling long distances. By using a second battery pack suitable for receiving high power output in a short time, more braking energy can be recovered via the second battery pack than the first battery pack, for example.

The electrical powering system can also include a third battery pack, which includes a supercapacitor. Because supercapacitors can receive and output large instantaneous power or high energy in a short duration of time, the third battery pack can further improve the electrical powering system in some instances. A supercapacitor may, for example, have a capacitance of 0.1 F, 0.5 F, 1 F, 5 F, 10 F, 50 F, 100 F, or greater or within a range defined by one of the preceding capacitance values.

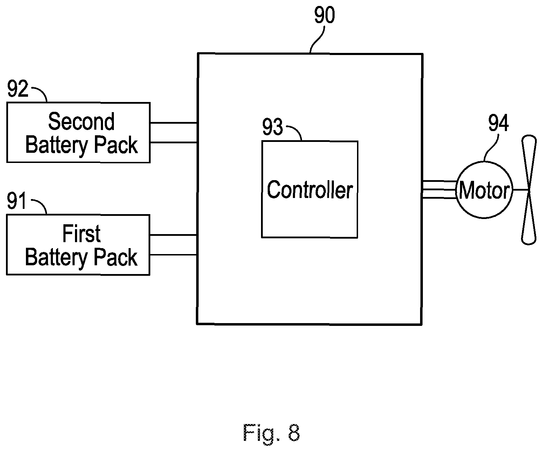

Figs. 8 illustrate an electrical power systems. It shows an electrical powering system that includes a first battery pack 91, a second battery pack 92, a circuit 90, and at least one motor 94.

The first battery pack 91 and the second battery pack 92 can each store electrical energy for driving the at least one motor 94. The first battery pack 91 and the second battery pack 92 can have different electrical characteristics. The first battery pack 91 can have a higher energy capacity per kilogram than the second battery pack 92, and the first battery pack 91 can have a higher power capacity (watt hours) than the second battery pack 92. Moreover, the first battery pack 91 can have a lower maximum, nominal, or peak power than the second battery pack 92; the first battery pack 91 can have a lower maximum, nominal, or peak current than the second battery pack 92; or, the first battery pack 91 can have a lower maximum, nominal, or peak voltage than the second battery pack 92. More than one or even all of the mentioned electrical characteristics of the first battery pack 91 and the second battery pack 92 can be different. However, only one of the mentioned electrical characteristics may be different or at least one other characteristic than the mentioned electrical characteristics may be different. The first battery pack 91 and the second battery pack 92 can have the same electrical characteristics.

The type or the material composition of the battery cells of the first battery pack 91 and the second battery pack 92 can be different. The type or the material composition of the battery cells of the first battery pack 91 and the second battery pack 92 can be the same, but an amount of copper or an arrangement of conductors can be different. In one example, the first battery pack 91 or the second battery pack 92 can be a lithium-ion (Li-ion) battery or a lithium-ion polymer (Li-Po) battery. The second battery pack 92 may include a supercapacitor (sometimes referred to as a supercap, ultracapacitor, or Goldcap).

The first battery pack 91 can include relatively high energy-density battery cells that can store a high amount of watt-hours per kilogram. The first battery pack 91 can include low power battery cells. The first battery pack 91 can provide a DC voltage/current/power or can be connected by a (two phase or DC) power line with the circuit 90.

The second battery pack 92 can include relatively low energy-density battery cells. The second battery pack 92 can include relatively high power battery cells. The second battery pack 92 can provide a DC voltage/current/power or is connected by a (two phase or DC) power line with the circuit 90.

The first battery pack 91 can form an integrated unit of mechanically coupled battery modules or the first battery pack 91 may be an electrically connected first set of battery modules. Similarly, the second battery pack 92 can form an integrated unit of mechanically coupled battery modules or the second battery pack 92 may be an electrically connected second set of battery modules. Some or all of the battery modules of each of first battery pack 91 or the second battery pack 92 can be stored in one or more areas of a housing of an aircraft, such as a within a wing or nose of the aircraft.

The first battery pack 91 can have a total energy capacity that exceeds a total energy capacity of the second battery pack 92. For example, a ratio of the total energy capacity of the first battery pack 91 and the total energy capacity of the second battery pack 92 can be 2:1, 3:1, 4:1, 5:1, 10:1, 20:1, 40:1, or 100:1 or within a range defined by two of the foregoing ratios.

The electrical powering system can include an external charging interface for charging the first battery pack 91 or the second battery pack 92 when the aircraft is on the ground and connected to a charging station outside of the aircraft.

Each, some, or one of the at least one motor can be an electrical motor. The at least one motor 94 can be connected to the circuit 90. The at least one motor 94 can receive over the circuit 90 electrical energy/power from the first battery pack 91 or the second battery pack 92 to drive the at least one motor 94. For example, the at least one motor 94 can be a three phase motor, such as a brushless motor, which is connected via a three phase AC power line with the circuit 90. However, the at least one motor 94 can instead be a different type of motor, such as any type of DC motor or a one phase AC motor. The at least one motor 94 can move a vehicle, such as an airborne vehicle like an aircraft. The at least one motor 94 can drive a (thrust-generating) propeller or a (lift-generating) rotor. In addition, the at least one motor 94 can also function as a generator. The electrical powering system or the at least one motor 94 can include two or more electrical motors as described further herein.

The circuit 90 can be connected with the first battery pack 91, the second battery pack 92, and the at least one motor 94.

The circuit 90 can include a controller 93 connected with the first battery pack 91, the second battery pack 92, and the at least one motor 94. The controller 93 can, for example, be connected over a two phase or DC power line with the first battery pack 91 and the second battery pack 92 or connected over a three phase power line with the at least one motor 94. The controller 93 can transform, convert, or control the power received from the first battery pack 91 or the second battery pack 92 into motor driving signals for driving the at least one motor 94. The controller 93 can include a power converter for converting the DC current of the first battery pack 91 or the second battery pack 92 into a (three phase) (AC) current for the at least one motor 94 (power converter working as inverter). The power converter can treat different input DC voltages (if the first battery pack 91 and the second battery pack 92 have different DC voltages). If the at least one motor 94 acts as generator, the power converter can convert the current generated from each phase of the at least one motor 94 into a DC current for loading the first battery pack 91 or the second battery pack 92 (power converter working as rectifier). The controller 93 can create the motor driving signals for the at least one motor 94 based on user input.

### Monitoring failure conditions

As indicated, the aspects, blocks and circuits that have been described so far in the context of battery monitoring systems (BMS) could apply to monitoring for different components of an electric or hybrid airplane.

For example, one or more monitoring subsystem (hereafter second monitoring subsystem) could be used for detecting catastrophic, or hazardous, failure conditions of a batteries in a battery pack, a battery pack, an electrical motor, and/or motor controller. Another monitoring subsystem could be used for redundant monitoring of those catastrophic or hazardous failure conditions, and/or for monitoring less serious failure conditions, such as major, minor or no safety risk conditions of an electrical motor or motor controller. One redundant monitoring subsystem may preferably be composed of non-programmable, non-stateful components and thus be easier to certify, while the other monitoring subsystem can comprise a processor or other programmable components.

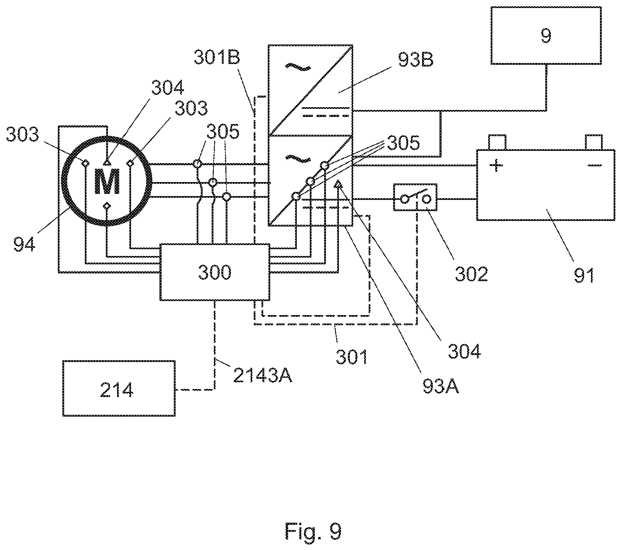

An example of an aircraft monitoring system for an electric or hybrid airplane with the different monitoring subsystems configured to notify failures of a component of the electric or hybrid aircraft is illustrated in Fig. 9. The monitored components may comprise at least one electrical motor 94 for driving a (thrust-generating) propeller or a (lift-generating) rotor, in order to move an aircraft. The at least one motor 94 may be controlled by a first motor controller 93A, or, in case of failure of the first motor controller 93A, by a backup motor controller 93B. The motor controller may be suited to convert the DC electrical currents from the power source 91, such as one or a plurality of battery packs, into AC currents for powering the phases of the at least one motor.

Many failures of a motor 94 are catastrophic or hazardous conditions, since a motor that does not work properly cannot drive the propeller, or might even damage the propeller or the aircraft. It is therefore required to monitor any such failure condition and to warn the pilot or driver. The system shown in Fig 9 depicts a monitoring subsystem 300, such as a non-stateful, analog or digital monitoring subsystem that does not include any programmable components, in order to measure and monitor parameters related to any such failure condition. The monitoring subsystem 300 might include at least one temperature sensor 304 for monitoring the temperature of the motor, as well as position, speed and/or rotation speed sensors 303 for detecting the position, speed, sense of rotation, and/or rotation frequency of the rotor of the motor, or of the axis of the propeller.

Other failures conditions that might be monitored by the monitoring subsystem 300 include catastrophic or failure conditions of the at least one motor controller 93A. Parameters of the motor controller(s), such as for example the temperature, voltages, currents and/or electric frequencies, are therefore monitored with at least one temperature sensor 304 and/or voltage, current or frequency sensors 305. The monitoring subsystem 300 may monitor signals provided by those sensors, it may determine if or when a catastrophic condition occurs, and, in case of condition has been detected, it may transmit this warning as a parameter, and/or the parameters measured with the sensors, to the interface of an information display system 2147A over the communication bus 2143A, as will be described in more detail below.

The monitoring subsystem 300 might be configured to deactivate a faulty component when a condition related to this component has been detected. For example, a monitoring subsystem might deactivate a battery pack, a battery cell, a motor coil, a complete motor, and/or a motor controller 93A when a condition related to this component has been detected. In the example of Figure 9, the monitoring subsystem might shut down the motor controller 93A with the power switch 302 controlled by line 301, when a condition related to this motor controller has been detected.

The monitoring subsystem 300 might be configured to activate a backup component when a condition related to the primary component has been detected. For example, a monitoring subsystem might activate a replacement battery pack, a replacement battery cell, a replacement motor coil, and/or a replacement motor controller 93A when a condition related to a primary corresponding component has been detected. In the example of Figure 9, the monitoring subsystem might power on the backup motor controller 93B when a condition related the primary motor controller 93A has been detected, and after the shutdown of this primary motor controller 93A.

The backup component that may be activated in case of failure of the primary corresponding component might be simpler than the primary component, and be less effective. For example, the backup motor controller 93B might be simpler than the primary motor controller it replaces in case of failure. In one example, the primary motor controller 93A operates in field-oriented control and controls the currents of the electrical motor 94 using vectors for representing two orthogonal components of the current, while the backup, replacement motor controller 93B uses a scalar control of the currents.

Another monitoring subsystem (the "first monitoring subsystem"; not shown in Fig 9) may be used for redundantly monitoring at least some of the above-mentioned parameters of the motor(s) or motor controller(s), and for monitoring other parameters of those motor(s) and motor controller(s). This first monitoring subsystem may include programmable components, such as processor, and other programmable components, such as sensor-less devices for detecting the position, speed and/or frequency of one motor, or other parameters. The first monitoring subsystem may transmit parameters to a programmable processing system, such as a board computer 2148B, which may be part of the information display system described below, for display of information.

The first monitoring subsystem may use sensors of the motor controller, such as speed sensors, phase sensors, positional sensors, etc, which may be present in order to drive to motor. The first monitoring system may also use additional sensors added for failure detection.

### Information Display System - Example Implementations

An information display system is disclosed for transmitting and communicating parameters and/or information relating to various components of an airplane, such as the state of a battery pack, to a driver or pilot of an electric vehicle. The information display system is configured to communicate failures of a plurality of components of the electric or hybrid aircraft. The information display system disclosed herein includes a first information display panel with a matrix display, a programmable processing system for controlling the matrix display, and a digital bus driver for receiving parameters over a first digital communication bus. A plurality of first parameters relating to the monitored components are received from a monitoring system through the first, programmable digital communication bus to the processing system for determining a first set of information.

The information display system disclosed herein furthermore comprises a second, redundant information display subsystem for presenting a second set of information related to parameters of the monitored components. The second set may be more limited than the first set of parameters. The second information display subsystem comprises a second information display panel having a non-matrix set of indicators and a non-programmable, non-stateful electronic control circuit for controlling the set of indicators as a function of a plurality of second parameters of said components. The second parameters are received over a second, non-programmable, non-stateful analog and/or digital communication bus. The second information display subsystem furthermore includes a combining circuit, for combining signals pertaining to the second parameters.

Because the second information display subsystem may be processorless, may not include any sequential or programmable combinational logic electronic components, and may not rely on any software (for example, executable program code that is executed by a processor), its certification is made easier compared to the first information display subsystem relying on processors, sequential or programmable combinational logic electronic components, or software.

The first information display subsystem may notify the pilot about catastrophic or hazardous failure conditions and/or it may notify less serious failure conditions, such as major, minor or no safety risk conditions of an electrical motor or motor controller. It may also provide supplementary information. Such supplementary information may be a non-critical status information, which is not indicative of a failure or immanent failure of a component. Such information may for example pertain to the current state of health of a battery, the current temperature of a monitored component, the rotation frequency of the electrical motor, under non-hazardous, non-catastrophic conditions.

The second information display subsystem is primarily used for alerting to catastrophic or hazardous failures of batteries in a battery pack, of a battery pack, of an electrical motor, and/or of motor controller. At a minimum, the second information display system alerts the pilot or driver of a hazardous or a catastrophic failure of at least one monitored battery pack or of at least one monitored electrical motor.

The parameters indicating such catastrophic or hazardous failure conditions in the second information display subsystem can be transmitted and converted into display information without the use of any programmable or stateful components, rendering the second information display subsystem easier to certify. The second information display subsystem may include analog, binary digital components. Preferably, the second information display subsystem does not include multivalued digital electronic components.

Ideally the first and the second information display subsystem are configured to redundantly alert the driver or pilot of the vehicle in case of a dysfunction of any of the monitored components.

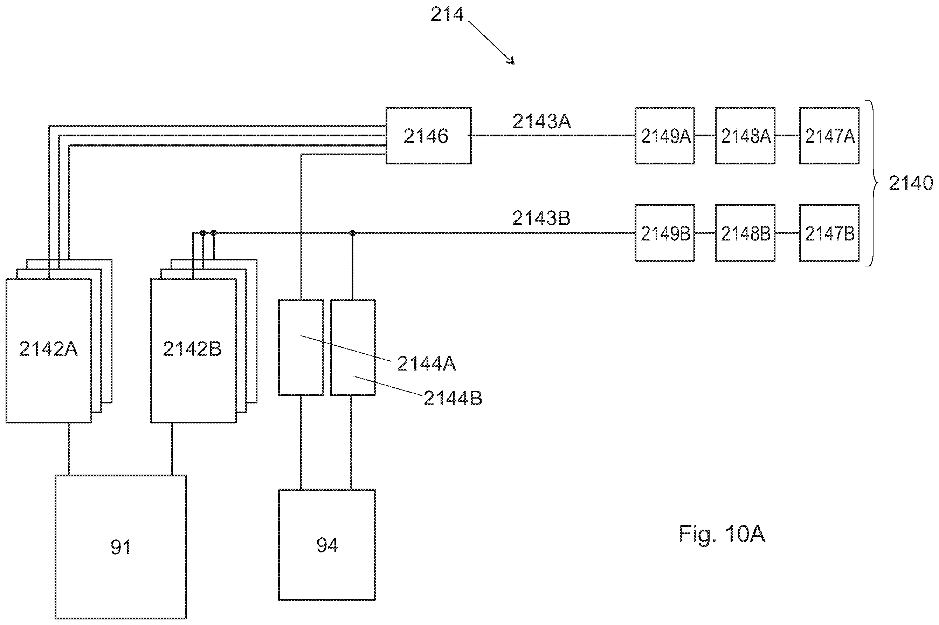

Figs 10A to 10C illustrate exemplary embodiments of the information display system 2140 disclosed herein. The examples depicted in these figures show a first subsystem with the first matrix display panel 2147B, a first programmable, digital communication bus 2143B, a digital, programmable bus driver 2149B and a programmable processing system 2148B, such as a processor, for example a board computer. The second information display system in these figures comprises a second information display panel 2147A, a non programable, non stateful electronic control circuit 2148A, a second non-programmable communication bus 2143A, an interface to the communication bus 2149A and the combining circuit 2146. Both, the first and the second information display subsystems are connected to monitoring subsystems 2142A, 2142B, 2148A, 2148B.

The first communication bus 2143B may be a CAN bus, an Ethernet bus, or a packet-oriented bus, and rely on switches, hubs, and other pieces of equipment that include processors, FPGAs and/or any other programmable component.

The second communication bus 2143A can comprise a plurality of electric lines, such as serial bus, for transmitting parameters of the monitored components in analog and/or digital form. The second communication bus could consist of a set of distinct electric lines, each line transmitting one or a plurality of parameters. The lines of the second communication bus can comprise optocouplers to provide a galvanic isolation between the monitoring subsystem and the information display subsystem.

In all three embodiments shown in Figs. 10A to 10C, an arrangement for connecting the information display subsystems to monitoring subsystems of a battery pack 91 and an electrical motor 94 is shown. Both components 91, 94 are monitored by two distinct monitoring subsystems, one of which being a simple, preferably non-stateful and non-programmable monitoring subsystem 2142A, 2148A and the other one being a programmable monitoring subsystem 2142B, 2148B. The monitoring subsystems 2142A and 2142B shown here are BMS of the at least one battery pack 91, and/or individual batteries of the battery pack, and the monitoring subsystems 2148A and 2148B monitor at least one electrical motor of the vehicle. Further details to possible characteristics of monitoring subsystems have been laid out in the previous section.

In a preferred aspect of this invention the first, programmable information display subsystem 2147B, 2148B, 2149B, is connected to and receives the plurality of first parameters from the first programmable monitoring systems 2142B, 2148B. The second information display subsystem 2147A, 2148A, 2149A, 2146 is connected to and receives the plurality of second parameters from the second monitoring subsystems 2142A, 2148A. It will however be obvious to the skilled person, that alternative arrangements of a plurality of monitoring subsystems and information display subsystems of this invention are possible.

The information display system 2140 comprises at least two distinct information display panels. A first information display panel 2147B comprises a matrix display, such as a computer display. A second, non-matrix information display panel 2147A comprises a non-matrix set of indicators, such as a plurality of light indicators, 7 segments displays, and/or other indicators where the information is not represented by a matrix arrangement of pixels.

In the embodiments shown in Figs. 10A to 10C, the non-programmable, non-stateful second monitoring subsystems 2142A, 2148A transmit second parameters related to catastrophic or hazardous failure conditions to the second information display subsystem through a non-programmable, non-stateful communication bus 2143A.

As furthermore illustrated in Figs. 23A to 23C the first monitoring subsystems 2142B, 2148B, which may comprise one or more programmable components such as BMS circuits, transmits first parameters related to the monitored components 91, 94 to the first display subsystem through the first digital communication bus 2143B.

The battery pack 91, or individual batteries of the pack, are monitored by a first monitoring subsystem which may comprise BMS circuits 2142B and/or other sensors, including as programmable components and a digital bus interface to connect it to the digital bus 2143B.. In addition, Figs 10A to 10C show that the battery pack 91, or individual batteries of the pack, are also monitored by a second monitoring circuit without programmable components 2142A.

The electrical motor 94 in the exemplary embodiments shown in Figs 10A to 10C is also monitored by two distinct subsystems, one of which being a non-programmable and non-stateful 2148A monitoring subsystem and the other one being a programmable monitoring subsystem 2148B with a digital bus interface to the bus 2143B.

The second monitoring subsystems 2142A, 2148A connect to the second information display subsystem through an analog or digital, non-stateful, non-programmable communication bus 2143A, comprising a plurality of communication lines. The plurality of second parameters monitored by the second monitoring subsystems 2142A, 2148A may be transmitted through these communication lines. Each communication line may transmit one or more parameters of a monitored component.

When several parameters, such as temperature, current, voltage, pressure, overtemperature, overcurrent, overvoltage, failure detection, etc, of different components are monitored, such as for example an electrical motor 94 and a battery pack 91 and/or individual batteries of a battery pack as shown in Figures 23A and 23B, a plurality of non-programmable communication lines are required to transmit the second parameters to the second information display panel 2147A. This is likely to render the electric circuitry cumbersome and difficult to handle. The plurality of wires furthermore add to the weight of the vehicle, which resulting in a higher energy consumption.

In order to reduce the number of electrical lines, such that the weight of the circuitry can be reduced, and unwieldy wiring can be avoided, the system includes at least one combining circuit 2146. The combining circuit 2146 is configured to combine a plurality of second input parameters of a plurality of monitored components to output combined second parameters to the non-programmable, non-stateful electronic communication line, as shown in Figs 10A to 10C.

The combining circuit 2146 may include at least one multiplexer, and/or a combinational logic. Several combining circuits, as well as different types of combining circuits, may be used to reduce the number of lines in the second communication bus 2143A.

The combining circuit 2146 may combine a plurality of parameters relating to one monitored component into one reduced number of parameters. For example, the combining circuit 2146 may combine an overtemperature parameter, an overcurrent parameter and/or and overvoltage parameter all related to one single battery cell, or one single battery module, or one single battery pack, and output one reduced number of parameters indicating a failure of this battery cell, battery module and/or battery pack. The combination may use an OR gate so that the transmitted parameter is active if any of the combined parameters (overtemperature, overvoltage and/or overcurrent) is active. In this case, the combining circuit deliver one single parameter indicating an unspecified failure of the component.

The combining circuit 2146 may combine a plurality of parameters relating to a plurality of monitored component into one reduced number of parameters. For example, the combining circuit 2146 may combine a parameter from a plurality of battery cells or from a plurality of battery modules, and output one reduced number of parameters. The combination may use an OR gate so that the transmitted parameter is active if a combined parameter of any of the combined component is active. In this case, the combining circuit deliver one single parameter indicating failure of an unspecified component.

The combining circuit 2146 may combine a plurality of parameters of different types relating to a plurality of monitored component into one reduced number of parameters. For example, the combining circuit 2146 may combine a plurality of different parameters from a plurality of battery cells or from a plurality of battery modules, and output one reduced number of parameters. The combination may use an OR gate so that the transmitted parameter is active if any combined parameter of any of the combined component is active. In this case, the combining circuit deliver one single parameter indicating an unspecified failure of any unspecified component.

The combining circuit 2146 may also multiplex different parameters, related to one or a plurality of components, into one single signals. The combined parameters may be transmitted serially, and/or in different frequency bands for example.

The combining circuit 2146 may also process monitored parameters and deliver a reduced set of processed parameters. For example, the combining circuit 2146 may compare at least one monitored parameter, such as a temperature parameter, a voltage parameter, or a current parameter, with at least one corresponding predefined threshold, and deliver one combined parameter, such as a binary parameter indicating if the parameter is above or below that threshold.

The combining circuit 2146 may perform different types of above mentioned combinations.

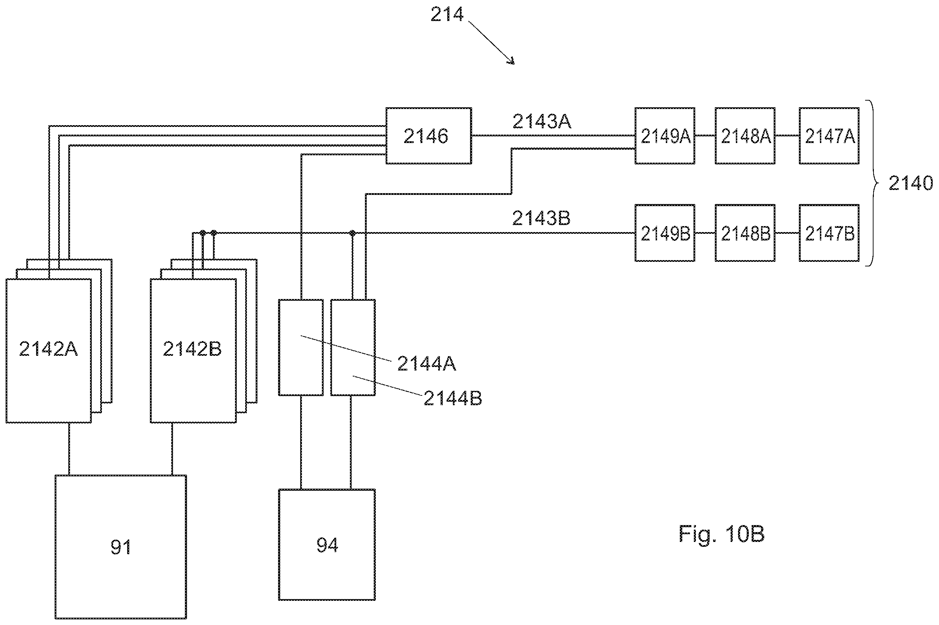

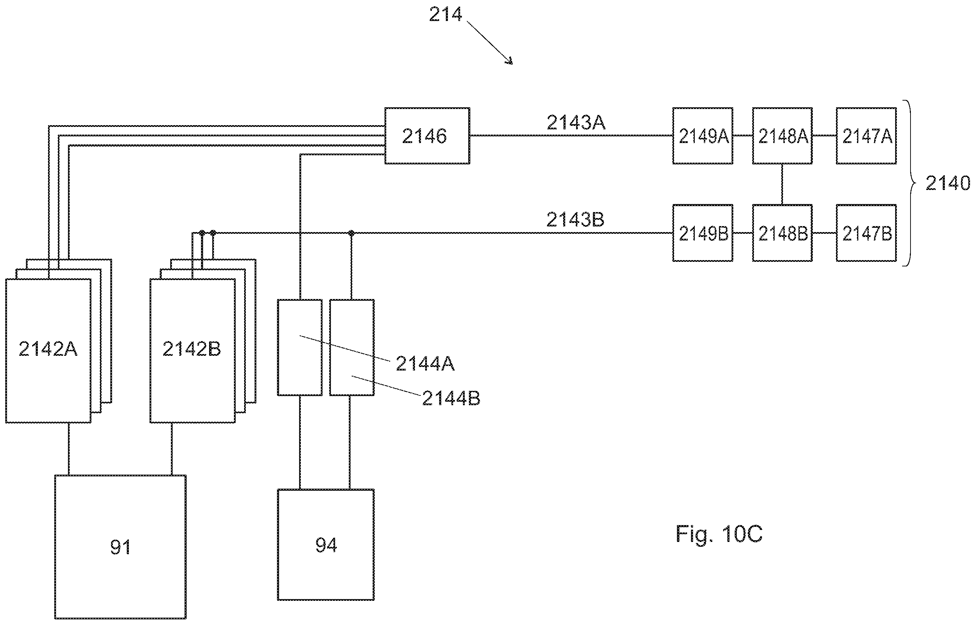

Figure 10A, 10B and 10C each illustrate distinct possible systems, of how the first monitoring subsystem 2142B, 2148B transfer information relating to the monitored components, such as the battery, to the information display subsystems.

In the embodiment illustrated in Fig 10A, the parameters monitored by the first monitoring subsystem 2142B, 2148B are only transmitted to the first information display subsystem through the first communication bus 2143B. In this embodiment, the first information display subsystem receives monitored parameters through the first programmable communication bus 2143B, and the second information display subsystem receives monitored parameters through the second non-programmable, non-stateful second communication bus 2143A only. The second information display subsystem in this embodiment is not connected directly to any of the components of either the programmable first monitoring subsystem or the programmable first communications system. However, the programmable processing system 2148B is connected with the non-programmable electronic control circuit 2148A of the second information display subsystem for activating indicators of this subsystem.

In the embodiment of Fig. 10B, some or all parameters received from the first, programmable monitoring subsystem 2142B, 2148B are transmitted to the second information display subsystem through the second communication bus 2143A, for example through additional lines of this communication bus as illustrated, or combined by the combining circuit 2146 with other parameters transmitted trough existing lines of the communication bus 2143A. This arrangement provides the advantage that parameters of the monitored components may be determined by two distinct monitoring subsystems, but communicated through the same second information display subsystem and on the same display panel 2147A. Any failure in one of the monitoring subsystems can therefore be compensated by the redundant information captured by the other monitoring subsystem and alerted through the second information subsystem panel to the pilot or the driver of the vehicle. This redundancy adds to the reliability of the system. By using a non-programmable communication bus 2143A rather than a programmable bus to transmit the parameters measured with the first component monitoring subsystem, the hurdles to achieve certifications are reduced.

Some parameters monitored by the first monitoring subsystem be transmitted by the first communication bus 2143B to the first information display subsystem, and redundantly by the second communication bus 2143A to the second information display subsystem.

The embodiment illustrated in Fig 10C differs from the two embodiments described above, in that the second display subsystem 2147A is connected both to the first and to the second communication buses 2143A, 2143B. Therefore, this second display subsystem 2147A receives parameters from both component monitoring subsystems, and transmitted over both communication buses..

Some parameters monitored by the first monitoring subsystem be transmitted by the first communication bus 2143B to the first information display subsystem, and by the first communication bus 2143B to the second information display subsystem. The second information display subsystem shown in Fig 10C may be at least partially controlled by the programmable processing system 2148B of the matrix display, so that the second information display can display alarms generated by the first monitoring subsystem and alarms generated by the second monitoring subsystem. Signals display by the second information display subsystem may be generated directly by the programmable processing system; a bus driver, such as a CAN bus driver, is not required although it could be provided.

In all the embodiments of Figs. 10A to 10C, a failure of one of the monitoring subsystems is less critical since the other monitoring subsystem can notify the pilot of any condition related to one redundantly monitored parameter or component, such that the alert can be notified by the indicators of the second information display panel. For example, an indicator of malfunction of any component will be activated if either the first monitoring subsystem and/or the second monitoring subsystem generates a parameter indicative of such malfunction. Based on this redundancy in monitoring some parameters and/or components, the risk of false negative information on the second information display panel is even further reduced. The risk of false positive might be marginally increased in case of failure of the first monitoring subsystem, but this risk is less critical than the risk of false negative.

### Additional Features and Terminology

As used herein, the term "programmable component," in addition to having its ordinary meaning, can refer to a component that may process executable instructions to perform operations or may be configured after manufacturing to perform different operations responsive to processing the same inputs to the component. As used herein, the term "non-programmable component," in addition to having its ordinary meaning, can refer to a component that may not process executable instructions to perform operations and may not be configured after manufacturing to perform different operations responsive to processing the same inputs to the component.

As used herein, the term "stateful component," in addition to having its ordinary meaning, can refer to a component that may remember a preceding state or event prior to a current state or event. A stateful component thus may determine an output from an event history as opposed to just from a current condition. As used herein, the term "non-stateful component," in addition to having its ordinary meaning, can refer to a component that may not remember a preceding state or event prior to a current state or event. A non-stateful component thus may not determine an output from an event history but may determine an output from a current condition.

Unless otherwise specified, the various illustrative logical blocks and modules described in connection with the programmable monitoring subsystem disclosed herein can be implemented or performed by a machine, a microprocessor, a state machine, a digital signal processor (DSP), an application specific integrated circuit (ASIC), a FPGA, or other programmable logic device, discrete gate or transistor logic, discrete hardware components, or any combination thereof designed to perform the functions described herein. A hardware processor can include electrical circuitry or digital logic circuitry configured to process computer-executable instructions. In another embodiment, a processor includes an FPGA or other programmable device that performs logic operations without processing computer-executable instructions. A processor can also be implemented as a combination of computing devices, e.g., a combination of a DSP and a microprocessor, a plurality of microprocessors, one or more microprocessors in conjunction with a DSP core, or any other such configuration. A computing environment can include any type of computer system, including, but not limited to, a computer system based on a microprocessor, a mainframe computer, a digital signal processor, a portable computing device, a device controller, or a computational engine within an appliance, to name a few.

Unless otherwise specified, the steps of a method, process, or algorithm described in connection with the programmable monitoring subsystem disclosed herein can be embodied directly in hardware, in a software module stored in one or more memory devices and executed by one or more processors, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium, media, or physical computer storage known in the art. An example storage medium can be coupled to the processor such that the processor can read information from, and write information to, the storage medium. In the alternative, the storage medium can be integral to the processor. The storage medium can be volatile or non-volatile. The processor and the storage medium can reside in an ASIC.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements or states. Thus, such conditional language is not generally intended to imply that features, elements or states are in any way required for one or more embodiments or that one or more embodiments necessarily include logic for deciding, with or without author input or prompting, whether these features, elements or states are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. Further, the term "each," as used herein, in addition to having its ordinary meaning, can mean any subset of a set of elements to which the term "each" is applied.

## Claims

1. An information display system for an electric or hybrid aircraft for notifying failures of a plurality of components of the electric or hybrid aircraft, said components including at least one battery pack (91) or at least one electrical motor (94), the information system comprising:
a first, programmable monitoring subsystem for monitoring said components and delivering a first set of parameters relating to said components;
a first information display subsystem having:
- a first matrix display panel (2147B) comprising a matrix display;
- a programmable processing system (2148B) programmed to present a first set of information related to said first set of parameters on said matrix display; and
- a digital bus driver (2149B) configured to receive said first set of parameters over a first, digital communication bus (2143B),
**characterised in that** the information system further comprises
a second, non-programmable monitoring subsystem for monitoring said components and delivering a second set of parameters relating to said components,
a second information display subsystem having:
- a second, redundant, display panel (2147A) consisting of a non-matrix set of indicators,
- a non-programmable, non-stateful electronic control circuit (2148A) for controlling said set of indicators for presenting a second set of information related to said second set of parameters and to at least some parameters from said first set of parameters, and
- a combining circuit (2146) for combining some of the parameters of said second set before transmission over said second communication bus (2143A).

2. The system of claim 1, comprising an interface (2149A) for a second, non-programmable, non-stateful analog and/or digital communication bus (2143A) for receiving said second set of parameters.

3. The system one of the claims 1 to 2, said second, non-programmable, non-stateful analog and/or digital communication bus (2143A) being arranged for transmitting said at least some parameters from said first set of parameters.

4. The system of claim 3, arranged for transmission of said at least some parameters from said first set of parameters both over the first and second communication bus.

5. The system of claims 1 to 4, said second information display subsystem comprising a digital bus driver (2149B) configured to receive parameters over said first, digital communication bus (2143B).

6. The system of one of the claims 1 to 5, arranged for notifying information pertaining to a condition of one monitored component by the second information display subsystem when at least one of the communication bus, either the non-stateful second communication bus, or the programmable first communication bus, transmits parameters notifying of such condition.

7. The system of one of the claims 1 to 6, said parameters comprising temperature, voltage and/or current of individual battery cells, of battery modules or of one said battery pack (91).

8. The system of one of the claims 1 to 7, said parameters comprising state of charge of individual battery cells, of battery modules, of one said battery pack (91), or of all battery packs.

9. The system of one of the claims 1 to 8, said parameters comprising the temperature and/or parameters indicative of the state of electrical isolation of one said battery pack (94).

10. The system of one of the claims 1 to 9, said combining circuit (2146) comprising at least one multiplexer for combining signals from a plurality of monitored components.

11. The system of one of the claims 1 to 10, said combining circuit (2146) comprising combinational logic for combining signals from a plurality of monitored components.

12. The system of one of the claims 1 to 11, the second communication bus (2143A) being configured to transmit digital signals representative of said parameters, generated for example by means of a comparator or an analog/digital converter.

13. The system of one of the claims 1 to 12, said first digital communication bus (2143B) being a Controller Area Network (CAN) bus.

14. The system of one of the claims 1 to 13, the first information display panel (2147B) comprising a user interface, including for example a tactile screen, configured to receive user input information and/or user input commands from the driver or the pilot of the aircraft.

15. An aircraft monitoring system comprising the information system of one of the claims 1 to 14.

## Patentansprüche

1. Informationsanzeigesystem für ein Elektro- oder Hybridflugzeug zur Meldung von Ausfällen mehrerer Komponenten des Elektro- oder Hybridflugzeugs, wobei die besagten Komponenten mindestens einen Batteriesatz (91) oder mindestens einen Elektromotor (94) umfassen, wobei das Informationssystem Folgendes umfasst:
ein erstes, programmierbares Überwachungssubsystem zur Überwachung der besagten Komponenten und zur Bereitstellung eines ersten Parametersatzes bezüglich der besagten Komponenten;
ein erstes Informationsanzeigesubsystem, mit:
einem ersten Matrixanzeigefeld (2147B), welches eine Matrixanzeige umfasst;
einem programmierbaren Verarbeitungssystem (2148B), welches dazu programmiert ist, einen ersten Satz von Informationen, die sich auf den besagten ersten Satz von Parametern beziehen, auf der besagten Matrixanzeige darzustellen; und
einem digitalen Bustreiber (2149B), welcher dazu konfiguriert ist, den besagten ersten Parametersatz über einen ersten digitalen Kommunikationsbus (2143B) zu empfangen,
**dadurch gekennzeichnet, dass** das Informationssystem zudem umfasst:
ein zweites, nicht programmierbares Überwachungssubsystem zur Überwachung der besagten Komponenten und zur Bereitstellung eines zweiten Parametersatzes bezüglich der besagten Komponenten;
ein zweites Informationsanzeigesubsystem, mit:
- einem zweiten, redundanten Anzeigefeld (2147A), welches aus einem nicht-matrixartigen Satz von Indikatoren besteht;
- einer nicht programmierbaren, nicht zustandsbehafteten elektronischen Steuerschaltung (2148A) zur Steuerung des besagten Satz von Indikatoren zur Darstellung eines zweiten Satzes von Informationen, welche sich auf den besagten zweiten Parametersatz und auf mindestens einige Parameter aus dem besagten ersten Parametersatz beziehen, und
- einer Kombinationsschaltung (2146) zur Kombination einiger der besagten Parameter des besagten zweiten Satzes vor der Übertragung über den besagten zweiten Kommunikationsbus (2143A).

2. System gemäss Anspruch 1, mit einer Schnittstelle (2149A) für einen zweiten, nicht programmierbaren, nicht zustandsbehafteten analogen und/oder digitalen Kommunikationsbus (2143A) zum Empfangen des besagten zweiten Parametersatzes.

3. System gemäss einem der Ansprüche 1 bis 2, wobei der besagte zweite, nicht programmierbare, nicht zustandsbehaftete analoge und/oder digitale Kommunikationsbus (2143A) zum Übertragen von zumindest einigen besagten Parametern aus dem besagten ersten Parametersatz eingerichtet ist.

4. System gemäss Anspruch 3, welches für die Übertragung von mindestens einigen besagten Parametern aus dem besagten ersten Parametersatz sowohl über den ersten als auch den zweiten Kommunikationsbus eingerichtet ist.

5. System gemäss den Ansprüchen 1 bis 4, wobei das besagte zweite Informationsanzeigesubsystem einen digitalen Bustreiber (2149B) umfasst, welcher zum Empfangen von Parametern über den besagten ersten, digitalen Kommunikationsbus (2143B) konfiguriert ist.

6. System gemäss einem der Ansprüche 1 bis 5, derart eingerichtet, um Informationen über den Zustand einer überwachten Komponente durch das zweite Informationsanzeigesubsystem zu melden, wenn mindestens einer der Kommunikationsbusse, entweder der zustandslose zweite Kommunikationsbus oder der programmierbare erste Kommunikationsbus, Parameter überträgt, die über einen derartigen Zustand informieren.

7. System gemäss einem der Ansprüche 1 bis 6, wobei die besagten Parameter die Temperatur, die Spannung und/oder den Strom einzelner Batteriezellen, Batteriemodule oder eines besagten Batteriesatzes (91) umfassen.

8. System gemäss einem der Ansprüche 1 bis 7, wobei die besagten Parameter den Ladezustand einzelner Batteriezellen, von Batteriemodulen, eines besagten Batteriesatzes (91) oder aller Batteriesätze umfassen.

9. System gemäss einem der Ansprüche 1 bis 8, wobei die besagten Parameter die Temperatur und/oder Parameter umfassen, die den Zustand der elektrischen Isolierung eines besagten Batteriesatzes (94) anzeigen.

10. System gemäss einem der Ansprüche 1 bis 9, wobei die besagte Kombinationsschaltung (2146) mindestens einen Multiplexer zum Kombinieren von Signalen aus einer Vielzahl überwachter Komponenten umfasst.

11. System gemäss einem der Ansprüche 1 bis 10, wobei die besagte Kombinationsschaltung (2146) eine kombinatorische Logik zum Kombinieren von Signalen aus einer Vielzahl überwachter Komponenten umfasst.

12. System gemäss einem der Ansprüche 1 bis 11, wobei der zweite Kommunikationsbus (2143A) dazu konfiguriert ist, um digitale Signale zu übertragen, welche die besagten Parameter darstellen und beispielsweise mittels eines Komparators oder eines Analog-/Digital-Wandlers erzeugt werden.

13. System gemäss einem der Ansprüche 1 bis 12, wobei der besagte erste digitale Kommunikationsbus (2143B) ein Controller Area Network (CAN)-Bus ist.

14. System gemäss einem der Ansprüche 1 bis 13, wobei das erste Informationsanzeigefeld (2147B) eine Benutzerschnittstelle umfasst, die beispielsweise einen Touchscreen umfasst, und die zum Empfangen von Benutzereingabeinformationen und/oder -befehlen vom Fahrer oder Piloten des Flugzeugs konfiguriert ist.

15. Flugzeugüberwachungssystem mit dem Informationssystem gemäss einem der Ansprüche 1 bis 14.

## Revendications

1. Système d'affichage d'informations pour aéronef électrique ou hybride permettant de signaler les pannes de plusieurs composants de l'aéronef électrique ou hybride, lesdits composants comprenant au moins un bloc-batterie (91) ou au moins un moteur électrique (94), le système d'information comprenant :
un premier sous-système de surveillance programmable permettant de surveiller lesdits composants et de fournir un premier ensemble de paramètres relatifs à ces dits composants ;
un premier sous-système d'affichage d'informations, comportant :
- un premier panneau d'affichage matriciel (2147B) comprenant un affichage matriciel ;
- un système de traitement programmable (2148B) programmé pour présenter un premier ensemble d'informations relatives audit premier ensemble de paramètres sur ledit affichage matriciel ;
- un pilote de bus numérique (2149B) configuré pour recevoir ledit premier ensemble de paramètres sur un premier bus de communication numérique (2143B),
**caractérisé en ce que** le système d'information comprend en outre :
un deuxième sous-système d'affichage d'informations, comportant :
- un deuxième panneau d'affichage redondant (2147A) constitué d'un ensemble d'indicateurs non matriciels ;
- un circuit de commande électronique non programmable et sans état (2148A) pour commander ledit ensemble d'indicateurs afin de présenter un deuxième ensemble d'informations relatives audit deuxième ensemble de paramètres et à au moins certains paramètres dudit premier ensemble de paramètres, et
- un circuit de combinaison (2146) pour combiner certains des paramètres dudit deuxième ensemble avant transmission sur ledit deuxième bus de communication (2143A).

2. Système selon la revendication 1, comprenant une interface (2149A) pour un deuxième bus de communication analogique et/ou numérique non programmable et sans état (2143A) pour recevoir ledit deuxième ensemble de paramètres.

3. Système selon l'une des revendications 1 à 2, ledit deuxième bus de communication analogique et/ou numérique non programmable et sans état (2143A) étant agencé pour transmettre au moins certains desdits paramètres à partir dudit premier ensemble de paramètres.

4. Système selon la revendication 3, agencé pour transmettre au moins certains desdits paramètres à partir dudit premier ensemble de paramètres à la fois sur le premier et le deuxième bus de communication.

5. Système selon les revendications 1 à 4, ledit deuxième sous-système d'affichage d'informations comprenant un pilote de bus numérique (2149B) configuré pour recevoir des paramètres sur ledit premier bus de communication numérique (2143B).

6. Système selon l'une des revendications 1 à 5, agencé pour notifier des informations relatives à un état d'un composant surveillé par le deuxième sous-système d'affichage d'informations lorsqu'au moins l'un des bus de communication, soit le deuxième bus de communication sans état, soit le premier bus de communication programmable, transmet des paramètres notifiant un tel état.

7. Système selon l'une des revendications 1 à 6, lesdits paramètres comprenant la température, la tension et/ou le courant de cellules de batterie individuelles, de modules de batterie ou d'un desdits blocs-batteries (91).

8. Système selon l'une des revendications 1 à 7, lesdits paramètres comprenant l'état de charge des cellules de batterie individuelles, des modules de batterie, d'un desdits blocs-batteries (91) ou de tous les blocs-batteries.

9. Système selon l'une des revendications 1 à 8, lesdits paramètres comprenant la température et/ou des paramètres indicatifs de l'état d'isolation électrique d'un dit bloc-batterie (94).

10. Système selon l'une des revendications 1 à 9, ledit circuit de combinaison (2146) comprenant au moins un multiplexeur pour combiner des signaux provenant d'une pluralité de composants surveillés.

11. Système selon l'une des revendications 1 à 10, ledit circuit de combinaison (2146) comprenant une logique combinatoire pour combiner des signaux provenant d'une pluralité de composants surveillés.

12. Système selon l'une des revendications 1 à 11, le deuxième bus de communication (2143A) étant configuré pour transmettre des signaux numériques représentatifs desdits paramètres, générés par exemple au moyen d'un comparateur ou d'un convertisseur analogique/numérique.

13. Système selon l'une des revendications 1 à 12, ledit premier bus de communication numérique (2143B) étant un bus CAN (Controller Area Network).

14. Système selon l'une des revendications 1 à 13, le premier panneau d'affichage d'informations (2147B) comprenant une interface utilisateur, comprenant par exemple un écran tactile, configurée pour recevoir des informations d'entrée utilisateur et/ou des commandes d'entrée utilisateur provenant du conducteur ou du pilote de l'aéronef.

15. Système de surveillance d'aéronef comprenant le système d'information selon l'une des revendications 1 à 14.
